# EUROPEAN PATENT APPLICATION

(11) **EP 4 228 371 A1**
(43) Date of publication of application: **16.08.2023**
(21) Application number: 22202767.4
(22) Date of filing: 20.10.2022
(51) Int. Cl.: H04W 74/08, H04B 7/06, H04W 16/14

(54) **METHOD OF TRANSMITTING AND RECEIVING SIGNAL IN UNLICENSED BAND AND APPARATUS THEREFOR**

(30) Priority: 11.02.2022 KR 20220018385
(71) Applicant: LG Electronics, Inc., Yeongdeungpo-gu Seoul 07336 (KR)
(72) Inventor: MYUNG, Sechang, 06772 Seoul (KR); KIM, Seonwook, 06772 Seoul (KR); YANG, Suckchel, 06772 Seoul (KR)
(74) Representative: Frenkel, Matthias Alexander

(57) **Abstract**

Disclosed is a method of performing an Uplink (UL) transmission by a user equipment (UE) in a wireless communication system. Specifically, the method comprises counting counter values for each of a plurality of sensing beams independently based on performing a first sensing on each of the plurality of sensing beams, performing a first UL transmission corresponding to a first sensing beam, among the plurality of sensing beams, which is determined to be IDLE based on the first sensing, initializing the counter values after an end of the first UL transmission, and performing a second UL transmission corresponding to a second sensing beam, among at least one sensing beams of the plurality of sensing beams, which is determined to be IDLE based on a second sensing on the at least one sensing beam.

## Description

### BACKGROUND OF THE DISCLOSURE

### Field of the Disclosure

The present disclosure relates to a method of transmitting and receiving a signal in an unlicensed band and an apparatus therefor and, more particularly, to a method of performing listen-before-talk (LBT) using a plurality of sensing beams and an apparatus therefor, in order to transmit and receive a signal through a plurality of beams and/or a plurality of channels in an unlicensed band.

### Discussion of the Related Art

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

### SUMMARY

An object of the present disclosure is to provide a method of transmitting and receiving a signal in an unlicensed band and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

According to an aspect of the present disclosure, provided herein is a method of performing an Uplink (UL) transmission by a user equipment (UE) in a wireless communication system, comprising counting counter values for each of a plurality of sensing beams independently based on performing a first sensing on each of the plurality of sensing beams; performing a first UL transmission corresponding to a first sensing beam, among the plurality of sensing beams, which is determined to be IDLE based on the first sensing; initializing the counter values after an end of the first UL transmission; and performing a second UL transmission corresponding to a second sensing beam, among at least one sensing beams of the plurality of sensing beams, which is determined to be IDLE based on a second sensing on the at least one sensing beam.

The first sensing beam covers a transmission beam of the first UL transmission, and the second sensing beam covers a transmission beam of the second UL transmission.

The counter values are determined for each of the plurality of sensing beams for the first sensing, and the counter values are re-determined for each of the plurality of sensing beams.

A counter value corresponding to the first sensing beam and counter value corresponding to a third sensing beam which is determined not to be IDLE are initialized after the first UL transmission.

A counter value corresponding to the first sensing beam has been reached to 0 before a time of the first UL transmission, UL transmission corresponding to the first sensing beam is not performed until the time of the first UL transmission.

Channel access procedures based on the first sensing and the second sensing for each of the plurality of sensing beams.

In another aspect of the present disclosure, provided herein is a user equipment (UE) for performing an Uplink (UL) transmission in a wireless communication system, comprising: at least one transceiver; at least one processor; and at least one memory operably connected to the at least one processor and configured to store instructions that, when executed, cause the at least one processor to perform operations. The operation may comprise: counting counter values for each of a plurality of sensing beams independently based on performing a first sensing on each of the plurality of sensing beams; performing, through the at least one transceiver, a first UL transmission corresponding to a first sensing beam, among the plurality of sensing beams, which is determined to be IDLE based on the first sensing; initializing the counter values after an end of the first UL transmission; and performing, through the at least one transceiver, a second UL transmission corresponding to a second sensing beam, among at least one sensing beams of the plurality of sensing beams, which is determined to be IDLE based on a second sensing on the at least one sensing beam.

The first sensing beam covers a transmission beam of the first UL transmission, and the second sensing beam covers a transmission beam of the second UL transmission.

The counter values are determined for each of the plurality of sensing beams for the first sensing, and the counter values are re-determined for each of the plurality of sensing beams.

A counter value corresponding to the first sensing beam and counter value corresponding to a third sensing beam which is determined not to be IDLE are initialized after the first UL transmission.

A counter value corresponding to the first sensing beam has been reached to 0 before a time of the first UL transmission, UL transmission corresponding to the first sensing beam is not performed until the time of the first UL transmission.

Channel access procedures based on the first sensing and the second sensing for each of the plurality of sensing beams.

In another aspect of the present disclosure, provided herein is an apparatus for performing an Uplink (UL) transmission in a wireless communication system, comprising: at least one processor; and at least one memory operably connected to the at least one processor and configured to store instructions that, when executed, cause the at least one processor to perform operations. The operations may comprise: counting counter values for each of a plurality of sensing beams independently based on performing a first sensing on each of the plurality of sensing beams; performing a first UL transmission corresponding to a first sensing beam, among the plurality of sensing beams, which is determined to be IDLE based on the first sensing; initializing the counter values after an end of the first UL transmission; and performing a second UL transmission corresponding to a second sensing beam, among at least one sensing beams of the plurality of sensing beams, which is determined to be IDLE based on a second sensing on the at least one sensing beam.

In another aspect of the present disclosure, provided herein is a computer-readable storage medium including at least one computer program causing at least one processor to perform an operation. The operation may comprise: counting counter values for each of a plurality of sensing beams independently based on performing a first sensing on each of the plurality of sensing beams; performing a first UL transmission corresponding to a first sensing beam, among the plurality of sensing beams, which is determined to be IDLE based on the first sensing; initializing the counter values after an end of the first UL transmission; and performing a second UL transmission corresponding to a second sensing beam, among at least one sensing beams of the plurality of sensing beams, which is determined to be IDLE based on a second sensing on the at least one sensing beam.

In another aspect of the present disclosure, provided herein is a method of performing a Downlink (DL) transmission by a base station (BS) in a wireless communication system, comprising: counting counter values for each of a plurality of sensing beams independently based on performing a first sensing on each of the plurality of sensing beams; performing a first DL transmission corresponding to a first sensing beam, among the plurality of sensing beams, which is determined to be IDLE based on the first sensing; initializing the counter values after an end of the first DL transmission; and performing a second DL transmission corresponding to a second sensing beam, among at least one sensing beams of the plurality of sensing beams, which is determined to be IDLE based on a second sensing on the at least one sensing beam.

In another aspect of the present disclosure, provided herein is a base station (BS) for performing a Downlink (DL) transmission in a wireless communication system, comprising: at least one transceiver; at least one processor; and at least one memory operably connected to the at least one processor and configured to store instructions that, when executed, cause the at least one processor to perform operations comprising: counting counter values for each of a plurality of sensing beams independently based on performing a first sensing on each of the plurality of sensing beams; performing, through the at least one transceiver, a first DL transmission corresponding to a first sensing beam, among the plurality of sensing beams, which is determined to be IDLE based on the first sensing; initializing the counter values after an end of the first DL transmission; and performing, through the at least one transceiver, a second DL transmission corresponding to a second sensing beam, among at least one sensing beams of the plurality of sensing beams, which is determined to be IDLE based on a second sensing on the at least one sensing beam.

According to [Method #1] to [Method #2] of the present disclosure, the most efficient signal transmission/reception method according to a corresponding multiplexing type and a corresponding sensing beam may be determined by determining a method of transmitting at least a part of a plurality of transmission beams depending on whether listen-before-talk (LBT) is successful or not, based on a multiplexing type of a plurality of transmission beams and on a sensing beam for sensing the transmission beams.

In addition, according to [Method #3] of the present disclosure, when performing LBT for a plurality of channels and/or a plurality of transmission beams through a plurality of sensing beams, an LBT method using the plural sensing beams may be variously configured according to a method of determining a backoff counter value and a method of counting the backoff counter value. Therethrough, an LBT method of efficiently transmitting and receiving a signal through the plural channels and/or the plural beams may be determined.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a wireless communication system supporting an unlicensed band;
FIG. 2 illustrates an exemplary method of occupying resources in an unlicensed band;
FIG. 3 illustrates an exemplary channel access procedure of a UE for UL signal transmission and/or DL signal transmission in an unlicensed band applicable to the present disclosure;
FIG. 4 is a diagram illustrating a plurality of listen-before-talk subbands (LBT-SBs) applicable to the present disclosure;
FIG. 5 is a diagram illustrating analog beamforming in the NR system;
FIG. 6 is a diagram illustrating beam-based LBT and group-based LBT according to an embodiment of the present disclosure;
FIG. 7 is a diagram illustrating a problem occurring while beam-based LBT is performed according to an embodiment of the present disclosure;
FIGS. 8, 9 and 10 are diagrams illustrating overall operation processes of a UE and a BS according to an embodiment of the present disclosure;
FIGS. 11 to 13 are diagrams illustrating a method of transmitting a signal through a plurality of beams according to an embodiment of the present disclosure;
FIG. 14 is a diagram illustrating a method of transmitting a signal through a plurality of beams and/or a plurality of channels according to an embodiment of the present disclosure;
FIG. 15 illustrates an exemplary communication system applied to the present disclosure;
FIG. 16 illustrates an exemplary wireless device applicable to the present disclosure; and
FIG. 17 illustrates an exemplary vehicle or autonomous driving vehicle applicable to the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the present disclosure is not limited to the 3GPP communication system. For the background art, terms, and abbreviations used in the present disclosure, refer to the technical specifications published before the present disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

Similarly to licensed-assisted access (LAA) in the legacy 3GPP LTE system, use of an unlicensed band for cellular communication is also under consideration in a 3GPP NR system. Unlike LAA, a stand-along (SA) operation is aimed in an NR cell of an unlicensed band (hereinafter, referred to as NR unlicensed cell (UCell)). For example, PUCCH, PUSCH, and PRACH transmissions may be supported in the NR UCell.

On LAA UL, with the introduction of an asynchronous HARQ procedure, there is no additional channel such as a physical HARQ indicator channel (PHICH) for indicating HARQ-ACK information for a PUSCH to the UE. Therefore, accurate HARQ-ACK information may not be used to adjust a contention window (CW) size in a UL LBT procedure. In the UL LBT procedure, when a UL grant is received in the n-th subframe, the first subframe of the most recent UL transmission burst prior to the (n-3)-th subframe has been configured as a reference subframe, and the CW size has been adjusted based on a new data indicator (NDI) for a HARQ process ID corresponding to the reference subframe. That is, when the BS toggles NDIs per one or more transport blocks (TBs) or instructs that one or more TBs be retransmitted, a method has been introduced of increasing the CW size to the next largest CW size of a currently applied CW size in a set for pre-agreed CW sizes under the assumption that transmission of a PUSCH has failed in the reference subframe due to collision with other signals or initializing the CW size to a minimum value (e.g., CWmin) under the assumption that the PUSCH in the reference subframe has been successfully transmitted without any collision with other signals.

In an NR system to which various embodiments of the present disclosure are applicable, up to 400 MHz per component carrier (CC) may be allocated/supported. When a UE operating in such a wideband CC always operates with a radio frequency (RF) module turned on for the entire CC, battery consumption of the UE may increase.

Alternatively, considering various use cases (e.g., eMBB, URLLC, mMTC, and so on) operating within a single wideband CC, a different numerology (e.g., SCS) may be supported for each frequency band within the CC.

Alternatively, each UE may have a different maximum bandwidth capability.

In this regard, the BS may indicate to the UE to operate only in a partial bandwidth instead of the total bandwidth of the wideband CC. The partial bandwidth may be defined as a bandwidth part (BWP).

A BWP may be a subset of contiguous RBs on the frequency axis. One BWP may correspond to one numerology (e.g., SCS, CP length, slot/mini-slot duration, and so on).

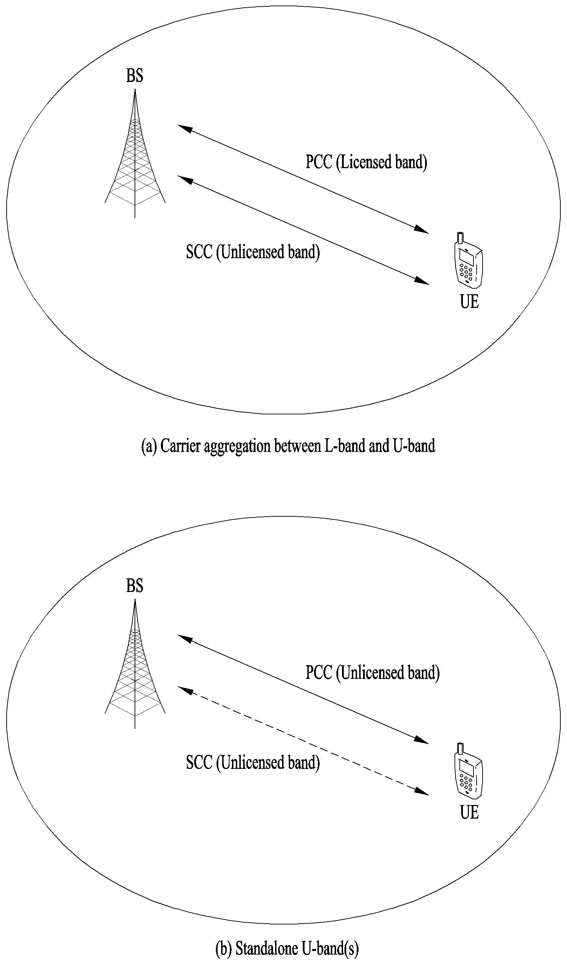

FIG. 1 illustrates an exemplary wireless communication system supporting an unlicensed band applicable to the present disclosure.

In the following description, a cell operating in a licensed band (L-band) is defined as an L-cell, and a carrier of the L-cell is defined as a (DL/UL) LCC. A cell operating in an unlicensed band (U-band) is defined as a U-cell, and a carrier of the U-cell is defined as a (DL/UL) UCC. The carrier/carrier-frequency of a cell may refer to the operating frequency (e.g., center frequency) of the cell. A cell/carrier (e.g., CC) is commonly called a cell.

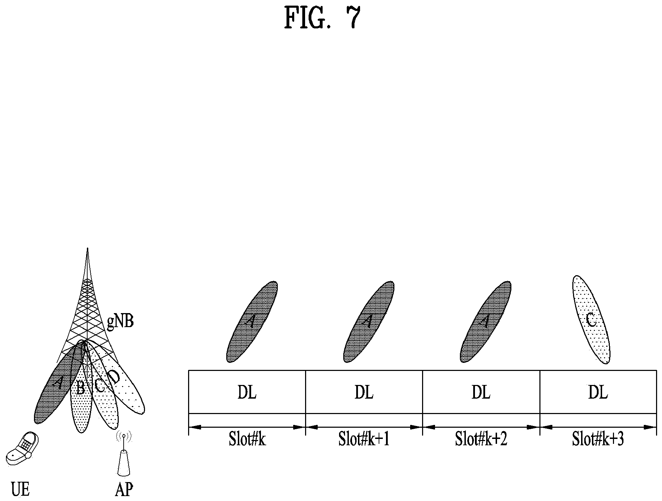

When a BS and a UE transmit and receive signals on carrier-aggregated LCC and UCC as illustrated in FIG. 7(a), the LCC and the UCC may be configured as a primary CC (PCC) and a secondary CC (SCC), respectively. The BS and the UE may transmit and receive signals on one UCC or on a plurality of carrier-aggregated UCCs as illustrated in FIG. 7(b). In other words, the BS and UE may transmit and receive signals only on UCC(s) without using any LCC. For an SA operation, PRACH, PUCCH, PUSCH, and SRS transmissions may be supported on a UCell.

Signal transmission and reception operations in a U-band as described in the present disclosure may be applied to the afore-mentioned deployment scenarios (unless specified otherwise).

Unless otherwise noted, the definitions below are applicable to the following terminologies used in the present disclosure.
- Channel: a carrier or a part of a carrier composed of a contiguous set of RBs in which a channel access procedure (CAP) is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tsl = 9 µs. The BS or the UE senses the slot during a sensing slot duration. When power detected for at least 4us within the sensing slot duration is less than an energy detection threshold Xthresh, the sensing slot duration Tsl is be considered to be idle. Otherwise, the sensing slot duration Tsl is considered to be busy. CAP may also be called listen before talk (LBT).
- Channel occupancy: transmission(s) on channel(s) from the BS/UE after a CAP.
- Channel occupancy time (COT): a total time during which the BS/UE and any BS/UE(s) sharing channel occupancy performs transmission(s) on a channel after a CAP. Regarding COT determination, if a transmission gap is less than or equal to 25 µs, the gap duration may be counted in a COT.

The COT may be shared for transmission between the BS and corresponding UE(s).

Specifically, sharing a UE-initiated COT with the BS may mean an operation in which the UE assigns a part of occupied channels through random backoff-based LBT (e.g., Category 3 (Cat-3) LBT or Category 4 (Cat-4) LBT) to the BS and the BS performs DL transmission using a remaining COT of the UE, when it is confirmed that a channel is idle by success of LBT after performing LBT without random backoff (e.g., Category 1 (Cat-1) LBT or Category 2 (Cat-2) LBT) using a timing gap occurring before DL transmission start from a UL transmission end timing of the UE.

Meanwhile, sharing a gNB-initiated COT with the UE may mean an operation in which the BS assigns a part of occupied channels through random backoff-based LBT (e.g., Cat-3 LBT or Cat-4 LBT) to the UE and the UE performs UL transmission using a remaining COT of the BS, when it is confirmed that a channel is idle by success of LBT after performing LBT without random backoff (e.g., Cat-1 LBT or Cat-2 LBT) using a timing gap occurring before UL transmission start from a DL transmission end timing of the BS.
- DL transmission burst: a set of transmissions without any gap greater than 16 µs from the BS. Transmissions from the BS, which are separated by a gap exceeding 16 µs are considered as separate DL transmission bursts. The BS may perform transmission(s) after a gap without sensing channel availability within a DL transmission burst.
- UL transmission burst: a set of transmissions without any gap greater than 16 µs from the UE. Transmissions from the UE, which are separated by a gap exceeding 16 µs are considered as separate UL transmission bursts. The UE may perform transmission(s) after a gap without sensing channel availability within a DL transmission burst.
- Discovery burst: a DL transmission burst including a set of signal(s) and/or channel(s) confined within a window and associated with a duty cycle. The discovery burst may include transmission(s) initiated by the BS, which includes a PSS, an SSS, and a cell-specific RS (CRS) and further includes a non-zero power CSI-RS. In the NR system, the discover burst includes may include transmission(s) initiated by the BS, which includes at least an SS/PBCH block and further includes a CORESET for a PDCCH scheduling a PDSCH carrying SIB1, the PDSCH carrying SIB1, and/or a non-zero power CSI-RS.

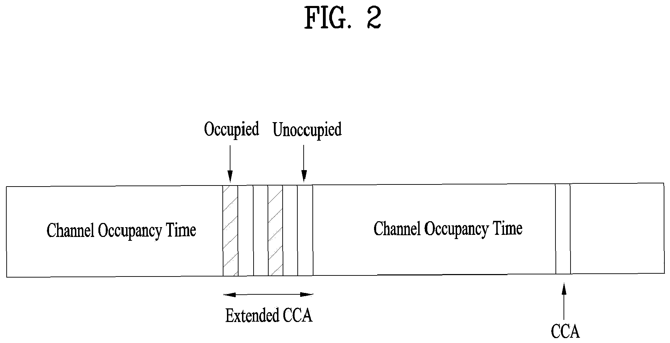

FIG. 2 illustrates an exemplary method of occupying resources in a U-band.

Referring to FIG. 2, a communication node (e.g., a BS or a UE) operating in a U-band should determine whether other communication node(s) is using a channel, before signal transmission. For this purpose, the communication node may perform a CAP to access channel(s) on which transmission(s) is to be performed in the U-band. The CAP may be performed based on sensing. For example, the communication node may determine whether other communication node(s) is transmitting a signal on the channel(s) by carrier sensing (CS) before signal transmission. Determining that other communication node(s) is not transmitting a signal is defined as confirmation of clear channel assessment (CCA). In the presence of a CCA threshold (e.g., Xthresh) which has been predefined or configured by higher-layer (e.g., RRC) signaling, the communication node may determine that the channel is busy, when detecting energy higher than the CCA threshold in the channel. Otherwise, the communication node may determine that the channel is idle. When determining that the channel is idle, the communication node may start to transmit a signal in the U-band. CAP may be replaced with LBT.

Table 1 describes an exemplary CAP supported in NR-U.

**[Table 1]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP | CAP without random back-off |
| | | - time duration spanned by sensing slots that are sensed to be idle before a downlink transmission(s) is deterministic |
| | - Type 2A, 2B, 2C | |
| UL | Type 1 CAP | CAP with random back-off |
| | | - time duration spanned by the sensing slots that are sensed to be idle before a downlink transmission(s) is random |
| | Type 2 CAP | CAP without random back-off |
| | | - time duration spanned by sensing slots that are sensed to be idle before a downlink transmission(s) is deterministic |
| | - Type 2A, 2B, 2C | |

In a wireless communication system supporting a U-band, one cell (or carrier (e.g., CC)) or BWP configured for a UE may be a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

A plurality of LBT-SBs may be included in the BWP of a cell (or carrier). An LBT-SB may be, for example, a 20-MHz band. The LBT-SB may include a plurality of contiguous (P)RBs in the frequency domain, and thus may be referred to as a (P)RB set.

A UE performs a Type 1 or Type 2 CAP for a UL signal transmission in a U-band. In general, the UE may perform a CAP (e.g., Type 1 or Type 2) configured by a BS, for a UL signal transmission. For example, CAP type indication information may be included in a UL grant (e.g., DCI format 0_0 or DCI format 0_1) that schedules a PUSCH transmission.

In the Type 1 UL CAP, the length of a time period spanned by sensing slots sensed as idle before transmission(s) is random. The Type 1 UL CAP may be applied to the following transmissions.
- PUSCH/SRS transmission(s) scheduled and/or configured by BS
- PUCCH transmission(s) scheduled and/or configured by BS
- Transmission(s) related to random access procedure (RAP)

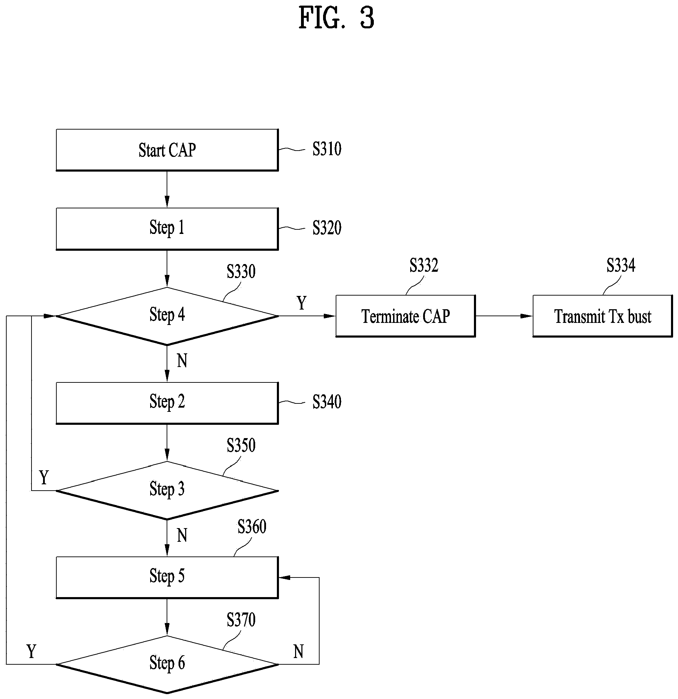

FIG. 3 illustrates Type 1 CAP among channel access procedures of a UE for UL/DL signal transmission in a U-band applicable to the present disclosure.

First, UL signal transmission in the U-band will be described with reference to FIG. 3.

The UE may sense whether a channel is idle for a sensing slot duration in a defer duration Td. After a counter N is decremented to 0, the UE may perform a transmission (S334). The counter N is adjusted by sensing the channel for additional slot duration(s) according to the following procedure.

Step 1) Set N=Ninit where Ninit is a random number uniformly distributed between 0 and CWp, and go to step 4 (S320).

Step 2) If N > 0 and the UE chooses to decrement the counter, set N=N-1 (S340).

Step 3) Sense the channel for an additional slot duration, and if the additional slot duration is idle (Y), go to step 4. Else (N), go to step 5 (S350).

Step 4) If N=0 (Y) (S330), stop CAP (S332). Else (N), go to step 2.

Step 5) Sense the channel until a busy sensing slot is detected within the additional defer duration Td or all slots of the additional defer duration Td are sensed as idle (S360).

Step 6) If the channel is sensed as idle for all slot durations of the additional defer duration Td (Y), go to step 4. Else (N), go to step 5 (S370).

Table 2 illustrates that mp, a minimum CW, a maximum CW, a maximum channel occupancy time (MCOT), and an allowed CW size applied to a CAP vary according to channel access priority classes.

**[Table 2]**

| Channel Access Priority Class (p) | mp | CWmin,p | CWmax, p | Tulmcot,p | allowed CWp sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,5 11,1023} |
| 4 | 7 | 15 | 1023 | 6 or 10 ms | {15,31,63,127,255,5 11,1023} |

The defer duration Td includes a duration Tf (16 µs) immediately followed by mp consecutive slot durations where each slot duration Tsl is 9 µs, and T_{f} includes a sensing slot duration Tsl at the start of the 16-µs duration.

CWWmin,p <= CWp <= CWmax,p. CWp is set to CWmin,p, and may be updated before Step 1 based on an explicit/implicit reception response to a previous UL burst (e.g., PUSCH) (CW size update). For example, CWp may be initialized to CWmin,p based on an explicit/implicit reception response to the previous UL burst, may be increased to the next higher allowed value, or may be maintained to be an existing value.

In the Type 2 UL CAP, the length of a time period spanned by sensing slots sensed as idle before transmission(s) is deterministic. Type 2 UL CAPs are classified into Type 2A UL CAP, Type 2B UL CAP, and Type 2C UL CAP. In the Type 2A UL CAP, the UE may transmit a signal immediately after the channel is sensed as idle during at least a sensing duration Tshort_dl (=25 µs). Tshort_dl includes a duration Tf (=16 µs) and one immediately following sensing slot duration. In the Type 2A UL CAP, Tf includes a sensing slot at the start of the duration. In the Type 2B UL CAP, the UE may transmit a signal immediately after the channel is sensed as idle during a sensing slot duration Tf(=16 µs). In the Type 2B UL CAP, Tf includes a sensing slot within the last 9 µs of the duration. In the Type 2C UL CAP, the UE does not sense a channel before a transmission.

To allow the UE to transmit UL data in the U-band, the BS should succeed in an LBT operation to transmit a UL grant in the U-band, and the UE should also succeed in an LBT operation to transmit the UL data. That is, only when both of the BS and the UE succeed in their LBT operations, the UE may attempt the UL data transmission. Further, because a delay of at least 4 msec is involved between a UL grant and scheduled UL data in the LTE system, earlier access from another transmission node coexisting in the U-band during the time period may defer the scheduled UL data transmission of the UE. In this context, a method of increasing the efficiency of UL data transmission in the U-band is under discussion.

To support a UL transmission having a relatively high reliability and a relatively low time delay, NR also supports CG type 1 and CG type 2 in which the BS preconfigures time, frequency, and code resources for the UE by higher-layer signaling (e.g., RRC signaling) or both of higher-layer signaling and L1 signaling (e.g., DCI). Without receiving a UL grant from the BS, the UE may perform a UL transmission in resources configured with type 1 or type 2. In type 1, the periodicity of a CG, an offset from SFN=0, time/frequency resource allocation, a repetition number, a DMRS parameter, an MCS/TB size (TBS), a power control parameter, and so on are all configured only by higher-layer signaling such as RRC signaling, without L1 signaling. Type 2 is a scheme of configuring the periodicity of a CG and a power control parameter by higher-layer signaling such as RRC signaling and indicating information about the remaining resources (e.g., the offset of an initial transmission timing, time/frequency resource allocation, a DMRS parameter, and an MCS/TBS) by activation DCI as L1 signaling.

The biggest difference between autonomous uplink (AUL) of LTE LAA and a CG of NR is a HARQ-ACK feedback transmission method for a PUSCH that the UE has transmitted without receiving a UL grant and the presence or absence of UCI transmitted along with the PUSCH. While a HARQ process is determined by an equation of a symbol index, a symbol periodicity, and the number of HARQ processes in the CG of NR, explicit HARQ-ACK feedback information is transmitted in AUL downlink feedback information (AUL-DFI) in LTE LAA. Further, in LTE LAA, UCI including information such as a HARQ ID, an NDI, and an RV is also transmitted in AUL UCI whenever AUL PUSCH transmission is performed. In the case of the CG of NR, the BS identifies the UE by time/frequency resources and DMRS resources used for PUSCH transmission, whereas in the case of LTE LAA, the BS identifies the UE by a UE ID explicitly included in the AUL UCI transmitted together with the PUSCH as well as the DMRS resources.

Now, DL signal transmission in the U-band will be described with reference to FIG. 3.

The BS may perform one of the following U-band access procedures (e.g., channel access procedures (CAPs)) to transmit a DL signal in the U-band.

### (1) Type 1 DL CAP method

In a Type 1 DL CAP, the length of a time duration spanned by sensing slots that are sensed to be idle before transmission(s) is random. The Type 1 DL CAP may be applied to the following transmissions:
- transmission(s) initiated by the BS, including (i) a unicast PDSCH with user plane data, or (ii) a unicast PDSCH with user plane data and a unicast PDCCH scheduling the user plane data; or
- transmission(s) initiated by the BS, including (i) only a discovery burst, or (ii) a discovery burst multiplexed with non-unicast information.

Referring to FIG. 3, the BS may first sense whether a channel is idle for a sensing slot duration of a defer duration Td. Next, if a counter N is decremented to 0, transmission may be performed (S334). The counter N is adjusted by sensing the channel for additional slot duration(s) according to the following procedures.

Step 1) Set N=Ninit where Ninit is a random number uniformly distributed between 0 and CWp, and go to step 4 (S320).

Step 2) If N > 0 and the BS chooses to decrement the counter, set N=N-1 (S340).

Step 3) Sense the channel for an additional slot duration, and if the additional slot duration is idle (Y), go to step 4. Else (N), go to step 5 (S350).

Step 4) If N=0 (Y), stop a CAP (S332)). Else (N), go to step 2 (S330).

Step 5) Sense the channel until a busy sensing slot is detected within the additional defer duration Td or all slots of the additional defer duration Td are sensed to be idle (S360).

Step 6) If the channel is sensed to be idle for all slot durations of the additional defer duration Td (Y), go to step 4. Else (N), go to step 5 (S370).

Table 3 illustrates that mp, a minimum CW, a maximum CW, an MCOT, and an allowed CW size, which are applied to a CAP, vary according to channel access priority classes.

**[Table 3]**

| Channel Access Priority Class (p) | mₚ | CWmin,p | CWmax,p | Tmcot,p | allowed CWp sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255, 511,1023} |

The defer duration Td includes a duration Tf (16 µs) immediately followed by mp consecutive sensing slot durations where each sensing slot duration Tsl is 9 µs, and Tf includes the sensing slot duration Tsl at the start of the 16-µs duration.

CWmin,p <= CWp <= CWmax,p. CWp is set to CWmin,p, and may be updated (CW size update) before Step 1 based on HARQ-ACK feedback (e.g., ratio of ACK signals or NACK signals) for a previous DL burst (e.g., PDSCH). For example, CWp may be initialized to CWmin,p based on HARQ-ACK feedback for the previous DL burst, may be increased to the next highest allowed value, or may be maintained at an existing value.

### (2) Type 2 DL CAP method

In a Type 2 DL CAP, the length of a time duration spanned by sensing slots sensed to be idle before transmission(s) is deterministic. Type 2 DL CAPs are classified into Type 2A DL CAP, Type 2B DL CAP, and Type 2C DL CAP.

The Type 2A DL CAP may be applied to the following transmissions. In the Type 2A DL CAP, the BS may transmit a signal immediately after a channel is sensed to be idle during at least a sensing duration Tshort_dl = 25 µs. Tshort_dl includes a duration Tf (= 16 µs) and one immediately following sensing slot duration. Tf includes the sensing slot at the start of the duration.
- Transmission(s) initiated by the BS, including (i) only a discovery burst, or (ii) a discovery burst multiplexed with non-unicast information, or
- Transmission(s) of the BS after a gap of 25 µs from transmission(s) by the UE within shared channel occupancy.

The Type 2B DL CAP is applicable to transmission(s) performed by the BS after a gap of 16 µs from transmission(s) by the UE within shared channel occupancy. In the Type 2B DL CAP, the BS may transmit a signal immediately after a channel is sensed to be idle during Tf=16 µs. Tf includes a sensing slot within the last 9 µs of the duration. The Type 2C DL CAP is applicable to transmission(s) performed by the BS after a maximum of a gap of 16 µs from transmission(s) by the UE within shared channel occupancy. In the Type 2C DL CAP, the BS does not sense a channel before performing transmission.

In a wireless communication system supporting a U-band, one cell (or carrier (e.g., CC)) or BWP configured for the UE may consist of a wideband having a larger BW than in legacy LTE. However, a BW requiring CCA based on an independent LBT operation may be limited according to regulations. If a subband (SB) in which LBT is individually performed is defined as an LBT-SB, a plurality of LBT-SBs may be included in one wideband cell/BWP. A set of RBs constituting an LBT-SB may be configured by higher-layer (e.g., RRC) signaling. Accordingly, one or more LBT-SBs may be included in one cell/BWP based on (i) the BW of the cell/BWP and (ii) RB set allocation information.

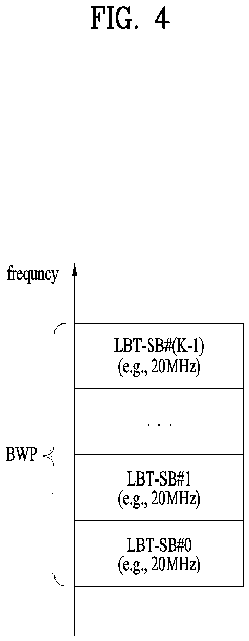

FIG. 4 illustrates that a plurality of LBT-SBs is included in a U-band.

Referring to FIG. 4, a plurality of LBT-SBs may be included in the BWP of a cell (or carrier). An LBT-SB may be, for example, a 20-MHz band. The LBT-SB may include a plurality of contiguous (P)RBs in the frequency domain and thus may be referred to as a (P)RB set. Although not illustrated, a guard band (GB) may be included between the LBT-SBs. Therefore, the BWP may be configured in the form of {LBT-SB #0 (RB set #0) + GB #0 + LBT-SB #1 (RB set #1 + GB #1) + ... + LBT-SB #(K-1) (RB set (#K-1))}. For convenience, LBT-SB/RB indexes may be configured/defined to be increased as a frequency band becomes higher starting from a low frequency band.

In the NR system, a massive multiple input multiple output (MIMO) environment in which the number of transmission/reception (Tx/Rx) antennas is significantly increased may be under consideration. That is, as the massive MIMO environment is considered, the number of Tx/Rx antennas may be increased to a few tens or hundreds. The NR system supports communication in an above 6 GHz band, that is, a millimeter frequency band. However, the millimeter frequency band is characterized by the frequency property that a signal is very rapidly attenuated according to a distance due to the use of too high a frequency band. Therefore, in an NR system operating at or above 6 GHz, beamforming (BF) is considered, in which a signal is transmitted with concentrated energy in a specific direction, not omnidirectionally, to compensate for rapid propagation attenuation. Accordingly, there is a need for hybrid BF with analog BF and digital BF in combination according to a position to which a BF weight vector/precoding vector is applied, for the purpose of increased performance, flexible resource allocation, and easiness of frequency-wise beam control in the massive MIMO environment.

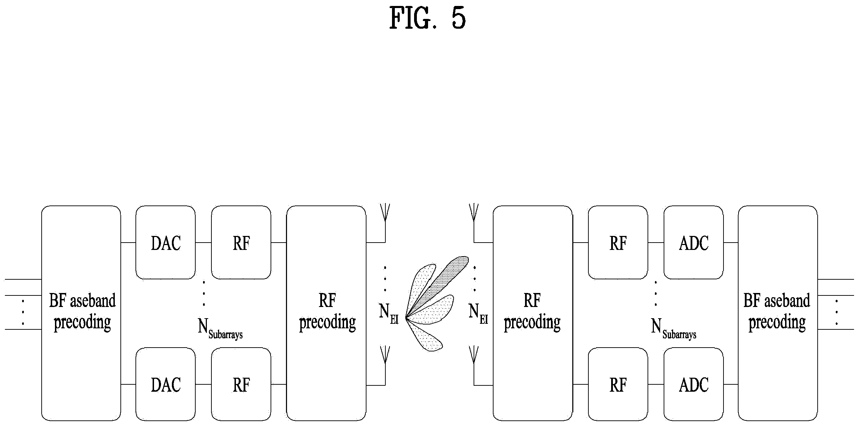

FIG. 5 is a block diagram illustrating an exemplary transmitter and receiver for hybrid BF.

To form a narrow beam in the millimeter frequency band, a BF method is mainly considered, in which a BS or a UE transmits the same signal through multiple antennas by applying appropriate phase differences to the antennas and thus increasing energy only in a specific direction. Such BF methods include digital BF for generating a phase difference for digital baseband signals, analog BF for generating phase differences by using time delays (i.e., cyclic shifts) for modulated analog signals, and hybrid BF with digital BF and analog beamforming in combination. Use of a radio frequency (RF) unit (or transceiver unit (TXRU)) for antenna element to control transmission power and phase control on antenna element basis enables independent BF for each frequency resource. However, installing TXRUs in all of about 100 antenna elements is less feasible in terms of cost. That is, a large number of antennas are required to compensate for rapid propagation attenuation in the millimeter frequency, and digital BF needs as many RF components (e.g., digital-to-analog converters (DACs), mixers, power amplifiers, and linear amplifiers) as the number of antennas. As a consequence, implementation of digital BF in the millimeter frequency band increases the prices of communication devices. Therefore, analog BF or hybrid BF is considered, when a large number of antennas are needed as is the case with the millimeter frequency band. In analog BF, a plurality of antenna elements are mapped to a single TXRU and a beam direction is controlled by an analog phase shifter. Because only one beam direction is generated across a total band in analog BF, frequency-selective BF may not be achieved with analog BF. Hybrid BF is an intermediate form of digital BF and analog BF, using B RF units fewer than Q antenna elements. In hybrid BF, the number of beam directions available for simultaneous transmission is limited to B or less, which depends on how B RF units and Q antenna elements are connected.

### 1. Beam Management (BM)

The BM refers to a series of processes for acquiring and maintaining a set of BS beams (transmission and reception point (TRP) beams) and/or a set of UE beams available for DL and UL transmission/reception. The BM may include the following processes and terminology.
- Beam measurement: an operation by which the BS or UE measures the characteristics of a received beamformed signal
- Beam determination: an operation by which the BS or UE selects its Tx/Rx beams
- Beam sweeping: an operation of covering a spatial domain by using Tx and/or Rx beams for a prescribed time interval according to a predetermined method
- Beam report: an operation by which the UE reports information about a signal beamformed based on the beam measurement.

The BM procedure may be divided into (1) a DL BM procedure using an SSB or CSI-RS and (2) a UL BM procedure using an SRS. Further, each BM procedure may include Tx beam sweeping for determining a Tx beam, and Rx beam sweeping for determining an Rx beam.

The DL BM procedure may include (1) transmission of beamformed DL RSs (e.g., CSI-RS or SSB) from the BS and (2) beam reporting from the UE.

A beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

### 2. DL BM-Related Beam Indication

The UE may receive at least a list of up to M candidate transmission configuration indication (TCI) states for QCL indication by RRC signaling. M depends on a UE capability and may be 64.

Each TCI state may be configured with one RS set. Table 4 describes an example of a TCI-State IE. The TC-State IE is related to a QCL type corresponding to one or two DL RSs.

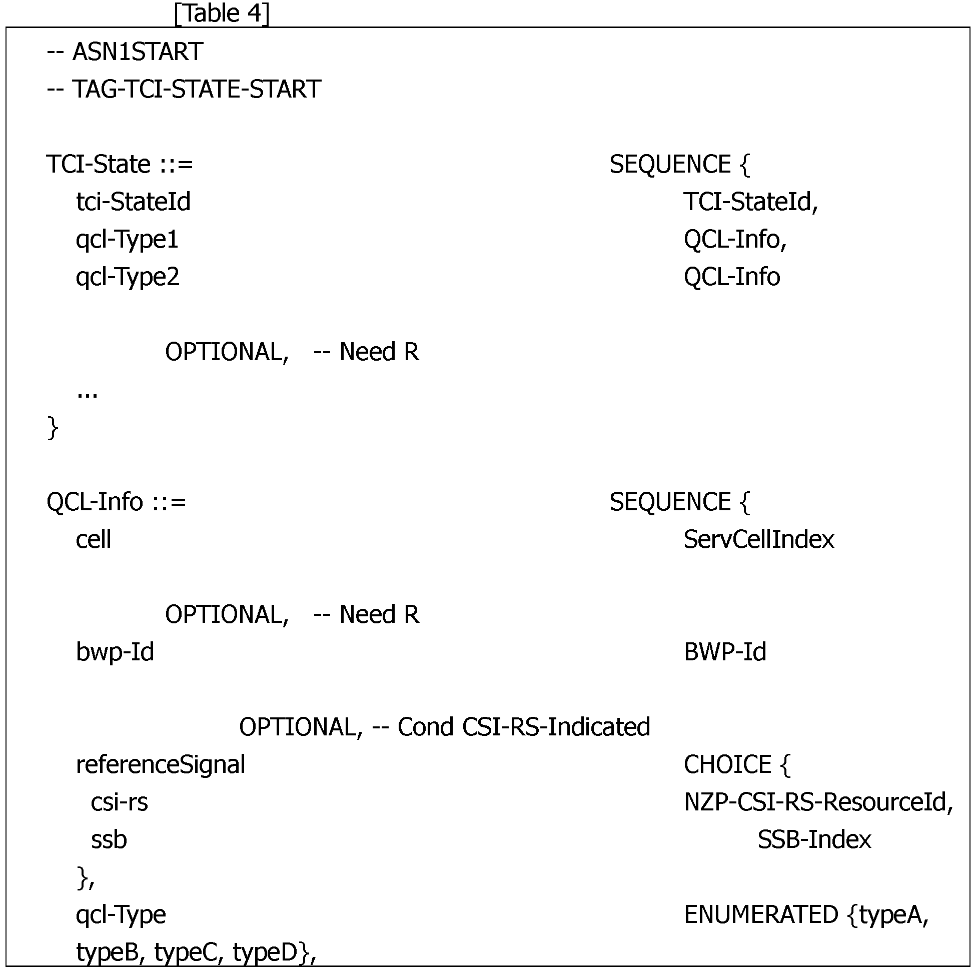

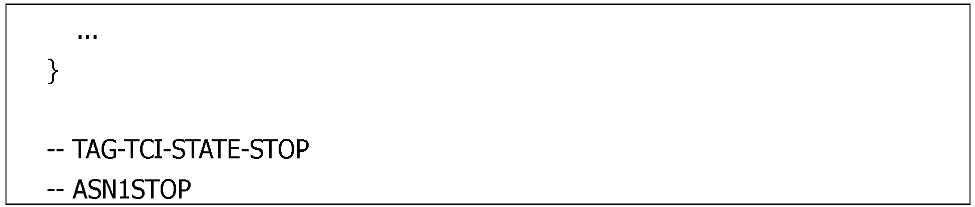

In Table 4, 'bwp-Id' identifies a DL BWP in which an RS is located, 'cell' indicates a carrier in which the RS is located, and 'referencesignal' indicates reference antenna port(s) serving as a QCL source for target antenna port(s) or an RS including the reference antenna port(s). The target antenna port(s) may be for a CSI-RS, PDCCH DMRS, or PDSCH DMRS.

### 3. Quasi-Co Location (QCL)

The UE may receive a list of up to M TCI-State configurations to decode a PDSCH according to a detected PDCCH carrying DCI intended for a given cell. M depends on a UE capability.

As described in Table 10, each TCI-State includes a parameter for establishing the QCL relationship between one or more DL RSs and a PDSCH DM-RS port. The QCL relationship is established with an RRC parameter qcl-Type1 for a first DL RS and an RRC parameter qcl-Type2 for a second DL RS (if configured).

The QCL type of each DL RS is given by a parameter 'qcl-Type' included in QCL-Info and may have one of the following values.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, if a target antenna port is for a specific NZP CSI-RS, the NZP CSI-RS antenna port may be indicated/configured as QCLed with a specific TRS from the perspective of QCL-Type A and with a specific SSB from the perspective of QCL-Type D. Upon receipt of this indication/configuration, the UE may receive the NZP CSI-RS using a Doppler value and a delay value which are measured in a QCL-TypeA TRS, and apply an Rx beam used to receive a QCL-Type D SSB for reception of the NZP CSI-RS.

### UL BM Procedure

In UL BM, beam reciprocity (or beam correspondence) between Tx and Rx beams may or may not be established according to the implementation of the UE. If the Tx-Rx beam reciprocity is established at both the BS and UE, a UL beam pair may be obtained from a DL beam pair. However, if the Tx-Rx beam reciprocity is established at neither the BS nor UE, a process for determining a UL beam may be required separately from determination of a DL beam pair.

In addition, even when both the BS and UE maintain the beam correspondence, the BS may apply the UL BM procedure to determine a DL Tx beam without requesting the UE to report its preferred beam.

The UL BM may be performed based on beamformed UL SRS transmission. Whether the UL BM is performed on a set of SRS resources may be determined by a usage parameter (RRC parameter). If the usage is determined as BM, only one SRS resource may be transmitted for each of a plurality of SRS resource sets at a given time instant.

The UE may be configured with one or more SRS resource sets (through RRC signaling), where the one or more SRS resource sets are configured by SRS-ResourceSet (RRC parameter). For each SRS resource set, the UE may be configured with K≥1 SRS resources, where K is a natural number, and the maximum value of K is indicated by SRS_capability.

The UL BM procedure may also be divided into Tx beam sweeping at the UE and Rx beam sweeping at the BS similarly to DL BM.

In proposed methods to be described later, a beam may mean an area for performing a specific operation (e.g., LBT or transmission) by concentrating power in a specific direction and/or in a specific space. In other words, the UE or the BS may perform an operation such as LBT or transmission by targeting a specific area (i.e., a beam) corresponding to a specific space and/or a specific direction. Thus, each beam may correspond to each space and/or each direction. In addition, the UE or the BS may use a spatial domain filter corresponding to each space and/or each direction in order to use each beam. That is, one spatial domain filter may correspond to one or more beams. The UE or the BS may perform an operation such as LBT or transmission using the spatial domain filter corresponding to a beam (or space and/or direction) to be used.

For example, the UE or the BS may perform LBT using a spatial domain filter corresponding to an LBT beam in a space and/or a direction for the corresponding LBT beam or perform DL/UL transmission using a spatial domain filter corresponding to a Tx beam in a space and/or a direction for the corresponding Tx beam.

In a high frequency band, specific directional transmission/reception using beamforming is being considered in addition to omnidirectional transmission/reception using a multi-antenna technique, in order to overcome large path loss. Further, in a U-band, implementation of a spectrum sharing mechanism such as LBT may be necessary according to national/regional regulations.

For signal transmission/reception in a specific direction, directional LBT for which LBT is performed only in a specific beam direction rather than omnidirectionally is being considered. Therefore, transmission may be performed when LBT is successful (e.g., when an energy measurement value is lower than an energy detection (ED) threshold) after determining whether a channel is occupied (e.g., whether the channel is idle/busy) using an appropriate LBT beam (i.e., sensing beam) to cover an interference region affected by a Tx beam that the BS/UE desires to transmit. Here, the operation of determining whether the channel is occupied using the LBT beam (i.e., sensing beam) may be referred to as an operation of sensing a Tx beam covered by the LBT beam (i.e., sensing beam) and/or a channel corresponding to the LBT beam (i.e., sensing beam).

For example, the UE or the BS may perform a sensing operation using sensing beams that cover at least one Tx beam, respectively. Alternatively, the UE or the BS may also perform the sensing operation using a sensing beam that covers all of at least one Tx beam. For example, if the UE does not have beam correspondence, the UE may perform the sensing operation using sensing beams that cover at least one Tx beam, respectively. Alternatively, if the UE has beam correspondence and selects one sensing beam that covers all of at least one Tx beam, the UE may perform the sensing operation using the corresponding sensing beam. However, if the UE has beam correspondence but uses sensing beams that cover at least one Tx beam, respectively, the UE may perform the sensing operation using the sensing beams that cover the at least one Tx beam, respectively.

In addition, since a signal may be transmitted through a plurality of Tx beams subjected to spatial division multiplexing (SDM)/time division multiplexing (TDM) in a channel occupancy time (COT) obtained through LBT, LBT for a sensing beam may be performed such that single wide beam-based LBT or (multiple) independent per-beam-based LBT is performed to cover all of the corresponding plural Tx beams. The present disclosure proposes a method of processing transmission of a failed beam direction when LBT in some beam directions fails while performing independent per-beam-based LBT through a plurality of sensing beams, and a method of transmitting a signal in the remaining successful beam directions. In addition, the present disclosure proposes a method of transmitting a signal through a plurality of Tx beams when single wide beam-based LBT that covers a plurality of Tx beams to be transmitted through SDM or TDM in a COT is successful or fails.

A typical CAP performed for transmission in a U-band is LBT. LBT is a mechanism that prevents collision between transmissions by allowing transmission of a corresponding signal when a noise level is less than a certain level as a result of comparing a surrounding interference level measured by the BS and/or the UE that is to transmit signals with a specific threshold such as an ED threshold.

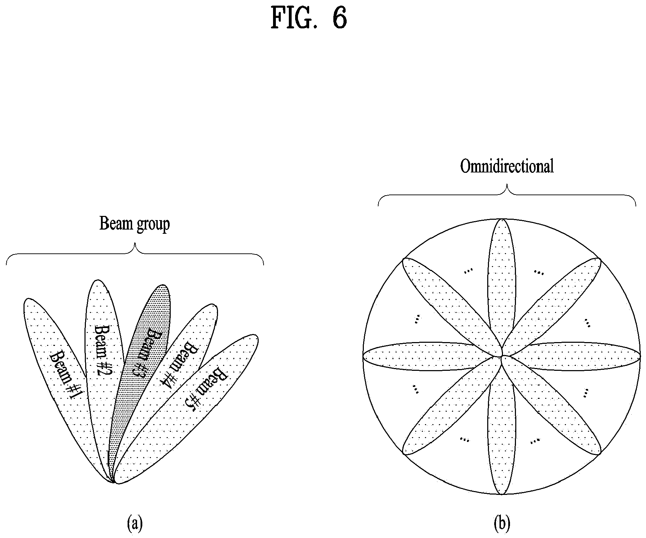

FIG. 6 illustrates exemplary Directional-LBT (D-LBT) and exemplary Omnidirectional-LBT (O-LBT).

FIG. 6(a) illustrates D-LBT including specific beam direction LBT and/or beam group unit LBT, and FIG. 6(b) illustrates O-LBT.

In a legacy NR-U system (e.g., Rel-16 NR-U), a DL/UL signal/channel has been transmitted if it is determined that a channel is idle by performing a CAP (i.e., LBT) as described with reference to FIG. 6. On the other hand, in the legacy NR-U system, an LBT band has been aligned with LBT bands of other RATs for coexistence with other RATs (e.g., Wi-Fi), and the CAP (i.e., LBT) has been performed omnidirectionally. In other words, non-directional LBT has been performed in the legacy NR-U system.

However, Rel-17 NR-U for transmitting the DL/UL signal/channel in a higher band (e.g., a band of 52.6 GHz or higher) than a U-band of 7 GHz used in the legacy NR-U system may utilize D-LBT which transmits the signal/channel by concentrating energy in a specific beam direction in order to overcome path loss larger than in the band of 7 GHz used in the legacy system. That is, in Rel-17 NR-U, the DL/UL signal/channel may be transmitted over wider coverage by reducing path loss through D-LBT, and efficiency may be improved even in coexistence with other RATs (e.g., WiGig).

Referring to FIG. 6(a), when a beam group consists of beams #1 to #5, performing LBT based on beams #1 to #5 may be referred to as beam group unit LBT. In addition, performing LBT through any one (e.g., beam #3) of beams #1 to #5 may be referred to as specific beam direction LBT. In this case, beams #1 to #5 may be continuous (or adjacent) beams but may also be discontinuous (or non-adjacent) beams. Further, the number of beams included in the beam group is not necessarily plural, and a single beam may form one beam group.

Meanwhile, although per-beam LBT may be performed, per-beam-group LBT may be performed. For example, if per-beam LBT is performed, beams #1 to #5 may cover a plurality of Tx beams multiplexed through TDM and/or SDM, respectively. For example, beam #1 may cover Tx beam #1 among the plural Tx beams multiplexed through TDM and/or SDM, beam #2 may cover Tx beams #2 among the plural Tx beams, beam #3 may cover Tx beam #3 among the plural of Tx beams, beam #4 may cover Tx beam #4 among the plural Tx beams, and beam #5 may cover Tx beam #5 among the plural Tx beams. Here, covering may mean that an area of a beam for performing LBT includes or is at least the same as an area in which a Tx beam corresponding to the corresponding beam affects a valid influence (or interference).

In other words, covering may mean performing energy measurement through a sensing beam for performing LBT including an area affected by the interference of a Tx beam. In addition, whether a channel is idle/busy may be determined by comparing energy measured through the sensing beam with an ED threshold.

As another example, performing per-beam-group LBT may mean that LBT is simultaneously performed in a beam group unit for a plurality of Tx beams, multiplexed through TDM and/or SDM, corresponding to beams included in the beam group. That is, one beam for a beam group (hereinafter, a group LBT beam) may be formed and LBT may be simultaneously performed for all of a plurality of Tx beams using the group LBT beam.

Accordingly, the group LBT beam may cover all Tx beams (e.g., Tx beam #1 to Tx beam #5) corresponding to the beam group. For example, an area of the group LBT beam may include or is at least the same as all of areas on which each of the Tx beams (e.g., Tx beam #1 to Tx beam #5) has a valid effect (or interference).

FIG. 6(b) illustrates O-LBT. When omnidirectional beams constitute one beam group and perform LBT in units of the corresponding beam group, this may be interpreted as performing O-LBT. In other words, if beams of all directions, i.e., omnidirectional beams which are a set of beams covering a specific sector in a cell, are included in one beam group, this may mean O-LBT.

In other words, in the case of a high frequency band, coverage may be limited due to significant path loss. In order to overcome such a coverage problem, a multi-antenna technique may be used. For example, narrow-beam transmission in which a signal is transmitted by concentrating energy in a specific direction, rather than omnidirectional transmission, may be performed.

In a high-frequency U-band, beam-based transmission needs to be considered by being combined with a CAP such as LBT described above. For example, in order to perform directional LBT in a specific direction, directional LBT (D-LBT) may be performed only in the corresponding direction or LBT in a beam group unit including a beam in the corresponding direction may be performed to determine whether a channel is occupied (e.g., idle/busy) and perform transmission. Here, the beam group may include a single beam or a plurality of beams. If the beam group includes omnidirectional beams, LBT may be extended to O-LBT.

Before a description of proposed methods, NR-based channel access schemes for a U-band used in the present disclosure are classified as follows.
- Category 1 (Cat-1): the next transmission immediately follows the previous transmission after a switching gap within a COT, and the switching gap is shorter than 16 us, including even a transceiver turn-around time. Cat-1 LBT may correspond to the above-described Type 2C CAP.
- Category 2 (Cat-2): an LBT method without backoff. Once a channel is confirmed to be idle during a specific time period shortly before transmission, the transmission may be performed immediately. Cat-2 LBT may be subdivided according to the length of a minimum sensing duration required for channel sensing immediately before a transmission. For example, Cat-2 LBT with a minimum sensing duration of 25 us may correspond to the above-described Type 2A CAP, and Cat-2 LBT with a minimum sensing duration of 16 us may correspond to the above-described Type 2B CAP. The minimum sensing durations are merely exemplary, and a minimum sensing duration less than 25 us or 16 us (e.g., a minimum sensing duration of 9 us) may also be available.
- Category 3 (Cat-3): an LBT method with fixed contention window size (CWS)-based backoff. A transmitting entity selects a random number N in a range of 0 to a (fixed) maximum CWS value and decrements a counter value each time it determines that a channel is idle. When the counter value reaches 0, the transmitting entity is allowed to perform a transmission.
- Category 4 (Cat-4): an LBT method with variable CWS-based backoff. A transmitting entity selects a random number N in a range of 0 to a (variable) maximum CWS value and decrements a counter value, each time it determines that a channel is idle. When the counter value reaches 0, the transmitting entity is allowed to perform a transmission. If the transmitting entity receives a feedback indicating reception failure of the transmission, the transmitting entity increases the maximum CWS value by one level, selects a random number again within the increased CWS value, and performs an LBT procedure. Cat-4 LBT may correspond to the above-described Type 1 CAP.

In the present disclosure, a per-beam LBT procedure or a per-beam-group LBT procedure may basically mean a random backoff-based LBT procedure (e.g., Cat-3 LBT or Cat-4 LBT). In the per-beam LBT procedure, if energy measured by performing carrier sensing in the specific beam direction is lower than an ED threshold as a result of comparison, a channel of a corresponding beam direction may be considered to be idle. If the measured energy is higher than the ED threshold, the channel of the corresponding beam direction may be determined to be busy.

The per-beam-group LBT procedure serves to perform the above-described LBT procedure in directions of all beams included in a beam group. When there is a beam, as a representative beam, in a specific direction previously configured/indicated in the beam group, a random backoff-based LBT procedure is performed with respect to the corresponding representative beam, similar to multi-CC LBT. In addition, Cat-2 LBT is performed with respect to the remaining beams included in the beam group and the beams are transmitted upon success.

It may be desirable for the following reasons to configure all DL signals/channels (or all UL signals/channels) included in one Tx burst as signals/channels having a spatial (partial) QCL relation. For example, in transmitting a Tx burst consisting of a total of 4 slots after the BS succeeds in LBT as illustrated in FIG. 7, the BS may transmit a signal in 3 slots in a beam direction of A and then transmit a signal in the fourth slot in a beam direction of C.

However, while the BS transmits a signal in the beam direction of A, a Wi-Fi AP coexisting in a corresponding U-band may fail to detect the signal transmitted in the beam direction of A and determine that a channel is idle. After succeeding in LBT, the Wi-Fi AP may start to transmit and receive a signal. In this case, if the BS transmits a signal in the beam direction of C starting from slot #k+3, the signal may act as interference with a corresponding Wi-Fi signal. Thus, when the BS that has performed transmission in the direction of A performs transmission by switching a beam direction without additional LBT, the BS may cause interference with another coexisting wireless node. Therefore, it may be desirable not to switch a Tx beam direction of a Tx burst that is transmitted after the BS succeeds in LBT.

In the NR system, a method of signalling beam information to be used by the UE during UL transmission and reception by associating a DL signal and a UL signal is under consideration. For example, if there is a beam direction generated by the UE on a channel state information reference signal (CSI-RS) resource by associating the CSI-RS resource and a sounding reference signal (SRS) resource, when the UE transmits an SRS on the SRS resource linked with the CSI-RS resource (or when the UE transmits a PUSCH scheduled through a UL grant through which the SRS resource linked with the CSI-RS resource is signalled), the UE may transmit the UL signal using a Tx beam corresponding to a CSI-RS Rx beam. In this case, the relationship between a specific Rx beam and a specific Tx beam may be configured by the UE in implementation when there is beam correspondence capability of the UE. Alternatively, the relationship between the specific Rx beam and the specific Tx beam may be configured by training of the BS and the UE when there is no beam correspondence capability of the UE.

Therefore, when an association relationship between the DL signal and the UL signal is defined, COT sharing may be allowed between a DL Tx burst consisting of DL signals/channels in a spatial (partial) QCL relation with the DL signal and a UL Tx burst consisting of UL signals/channels in a spatial (partial) QCL relation with the UL signal associated with the DL signal.

Here, the UL signals/channels may include at least one or more of the following signals/channels:
- an SRS, a demodulation reference signal (DMRS) for a PUCCH, a DMRS for a PUSCH, a PUCCH, a PUSCH, or a PRACH

Here, the DL signals/channels may include at least one or more of the following signals/channels:
- a PSS, an SSS, a DMRS for a PBCH, a PBCH, a tracking reference signal (TRS), a CSI-RS for tracking, a CSI-RS for CSI acquisition, a CSI-RS for radio resource management (RRM) measurement, a CSI-RS for BM, a DMRS for a PDCCH, a DMRS for a PDSCH, a PDCCH (or a control resource set (CORESET) in which the PDCCH may be transmitted), a PDSCH, or a signal introduced for the purpose of tracking, (fine) time/frequency synchronization, coexistence, power saving, or frequency reuse factor = 1, arranged in front of a Tx burst, as a modified signal of the above-listed signals or related signals or as a newly introduced signal

Meanwhile, each proposed method to be described later may be combined with other proposed methods and be applied together therewith unless each proposed method conflicts with other proposed methods.

In the case of a nation/region in which a spectrum sharing mechanism such as LBT is needed in a U-band, it is necessary to check whether a channel is occupied by another node before transmission and then perform signal transmission.

In a high frequency band, since transmission is performed only in a specific beam direction through a multi-antenna technique in order to overcome large path loss, LBT may also be performed only in a direction of a beam to be transmitted. If LBT is successful, a COT in which continuous transmission may be performed without additional LBT according to national/regional regulations may be acquired.

In the corresponding COT, transmission may be performed regardless of a length corresponding to a gap between transmissions. Meanwhile, in a specific nation/region, if a time gap of a certain length or more occurs between transmissions even within the COT, short channel sensing such as Cat-2 LBT may additionally be demanded.

Basically, since LBT creates interference when transmission of the UE/BS is performed with a specific power, whether there is another transmission in a corresponding interference area may be determined by comparing a measured energy value with the ED threshold. In other words, whether a channel is occupied (idle/busy) may be determined by comparing the measured energy value with the ED threshold. For example, when the measured energy is higher than the ED threshold, it is determined that another transmission is in progress and thus transmission may be suspended to avoid collision.

Accordingly, when one beam is to be transmitted in a specific beam direction, whether a channel is occupied may be determined through a sensing beam that covers an area affected by corresponding beam transmission. In this case, the sensing beam may be substantially the same as a Tx beam or may be a beam having a relatively wide beam pattern including the Tx beam (e.g., the beam width of the sensing beam is large relative to the beam width of the Tx beam).

If a plurality of beams, rather than a single beam, is to be transmitted through SDM/TDM in a COT obtained through LBT, the UE needs to determine whether the channel is occupied by performing LBT in all directions of a plurality of beams to be transmitted in the COT before COT start. Even in this case, similar to the case of LBT for a single beam, LBT may be performed by constructing the sensing beam with the same beams as Tx beams to be transmitted in the COT or using a wide beam with a relatively wide beam width that covers all of a plurality of Tx beams as the sensing beam.

LBT for a plurality of beams transmitted through SDM/TDM in the COT may be performed differently according to capability. For example, when capability is sufficient so that LBT in a plurality of beam directions is capable of being simultaneously performed, simultaneous sensing may be performed. On the other hand, if there is no capability, sensing may be sequentially performed in each beam direction. If a beam direction for which LBT is successful and a beam direction for which LBT fails are mixed while performing such per-beam LBT, since all beams originally intended to be transmitted through SDM/TDM may not be transmitted, it is necessary to determine whether to transmit the remaining partial beams for which LBT is successful or perform LBT for all beams again.

Before describing the methods of the present disclosure, the overall operation processes of the UE, the BS, and the network for implementing the proposed methods of the present disclosure will now be described.

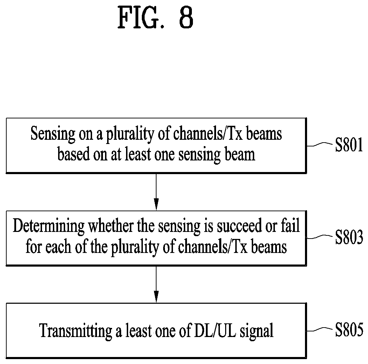

FIG. 8 is a diagram for explaining an overall operation process of the UE or the BS for transmitting a DL/UL signal based on the methods of the present disclosure.

Referring to FIG. 8, the UE or the BS may sense a plurality of channels and/or a plurality of Tx beams based on at least one sensing beam (S801). In this case, the at least one sensing beam may be a beam that covers the plural Tx beams. For example, one sensing beam may cover all of the plural Tx beams or plural sensing beams may cover respective corresponding Tx beams.

The UE or the BS may determine whether sensing for each of the plural channels and/or Tx beams is successful or not (S803). For example, the UE or the BS may determine whether each of the plural channels and/or Tx beams is idle or busy.

In addition, the UE or the BS may transmit at least one DL/UL signal based on whether each of the plural channels and/or Tx beams is idle/busy (S805).

Meanwhile, a specific operation of the UE or the BS according to S801 to S805 described above may be based on at least one of [Method #1] to [Method #3].

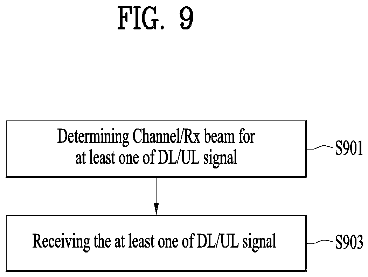

FIG. 9 is a diagram illustrating an overall operation process of the UE or the BS for receiving a DL/UL signal based on the methods of the present disclosure.

Referring to FIG. 9, the UE or the BS may determine at least one Rx beam for receiving at least one DL/UL signal transmitted through at least one Tx beam (S901).

In addition, the UE or the BS may receive the at least one DL/UL signal transmitted based on at least one of [Method #1] to [Method #3] through the at least one Rx beam (S903).

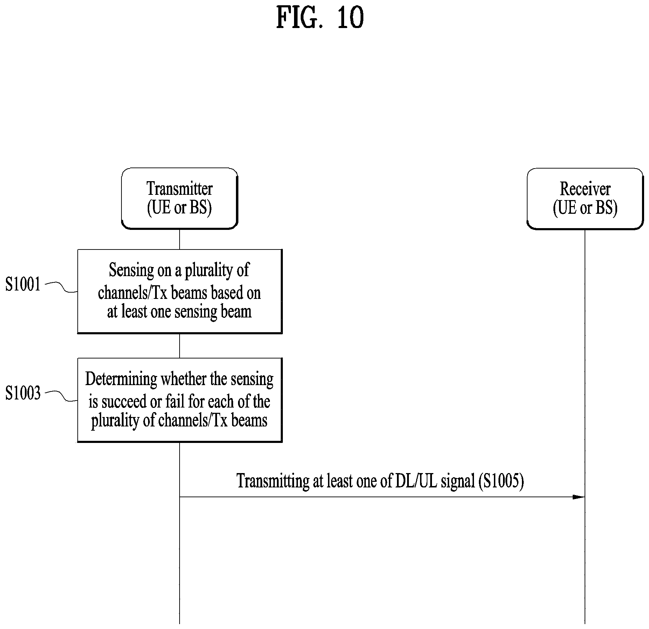

FIG. 10 is a diagram illustrating an overall operation process of a network for transmitting a DL/UL signal based on the proposed methods of the present disclosure.

Referring to FIG. 10, a transmitter (e.g., the UE or BS) may sense a plurality of channels and/or a plurality of Tx beams based on at least one sensing beam (S1001). In this case, the at least one sensing beam may be a beam that covers the plural Tx beams. For example, one sensing beam may cover all of the plural Tx beams, and plural sensing beams may cover respective corresponding Tx beams.

The transmitter (e.g., the UE or BS) may determine whether sensing for each of the plural channels and/or Tx beams is successful or not (S1003). For example, the transmitter (e.g., the UE or BS) may determine whether each of the plural channels and/or Tx beams is idle/busy.

In addition, the transmitter (e.g., the UE or BS) may transmit at least one DL/UL signal to a receiver (e.g., the UE or BS) based on whether each of the plural channels and/or Tx beams is idle or busy (S1005).

Meanwhile, a specific operation of the network according to S1001 to S1005 described above may be based on at least one of [Method #1] to [Method #3].

[Method #1] Method of performing DL/UL transmission for a successful beam direction when LBT for partial Tx beam directions fails although the BS or the UE has performed random backoff-based LBT (e.g., Cat-3 LBT or Cat-4 LBT) for a multi-beam COT in which beams aretransmitted through SDM in a plurality of Tx beam directions in a COT

### 1. Method #1-1

When the UE or the BS performs LBT using a single sensing beam that covers all Tx beams to be transmitted in a COT, if LBT using the single beam fails, the UE or BS may drop transmissions for all Tx beams multiplexed through SDM and perform no transmission.

According to [Method #1-1], if a channel is determined to be busy as a result of performing LBT for a plurality of Tx beams through one sensing beam, it is very difficult to discern by which Tx beam the channel is determined to be busy. Therefore, it is necessary to strictly determine an idle/busy state so that transmissions for all Tx beams covered by one sensing beam are dropped, thereby strictly preventing collision with other signals and stabilizing DL/UL transmissions through a plurality of Tx beams.

### 2. Method #1-2

Upon simultaneously performing LBT for sensing beams that cover all Tx beams to be transmitted in a COT, respectively, the UE or the BS may perform transmissions of Tx beams corresponding to successful sensing beam directions through SDM, except for transmissions of Tx beams corresponding to failed sensing beam directions.

However, [Method #1-2] may mean that a layer corresponding to a sensing beam direction for which LBT has failed in transmissions through a plurality of layers configured previously for transmission is dropped and transmission is performed by lowering a rank. In addition, transmission by dropping the layer and lowering the rank may be limitedly applied only to DL transmission.

According to [Method #1-2], since each of the plural sensing beams covers one Tx beam, even if LBT through the plural sensing beams is simultaneously performed, whether each of Tx beams is idle/busy may be specifically and individually determined. Therefore, even if there is a sensing beam for which LBT fails among the plural sensing beams, since transmission for a Tx beam corresponding to a successful sensing beam may be performed, efficiency of transmission and predictability of a transmission timing may be increased by performing transmission suitable for a scheduling timing as much as possible. In addition, a COT may be shared with a corresponding Tx beam by acquiring the COT through a sensing beam for which LBT is successful, so that utility of transmission may be increased.

When the BS or a UE desires to transmit a plurality of Tx beams through SDM in a COT, simultaneous LBT per sensing beam may be performed through a single sensing beam or a plurality of sensing beams that covers a plurality of Tx beams to be transmitted in the COT and transmission may be performed when LBT is successful.

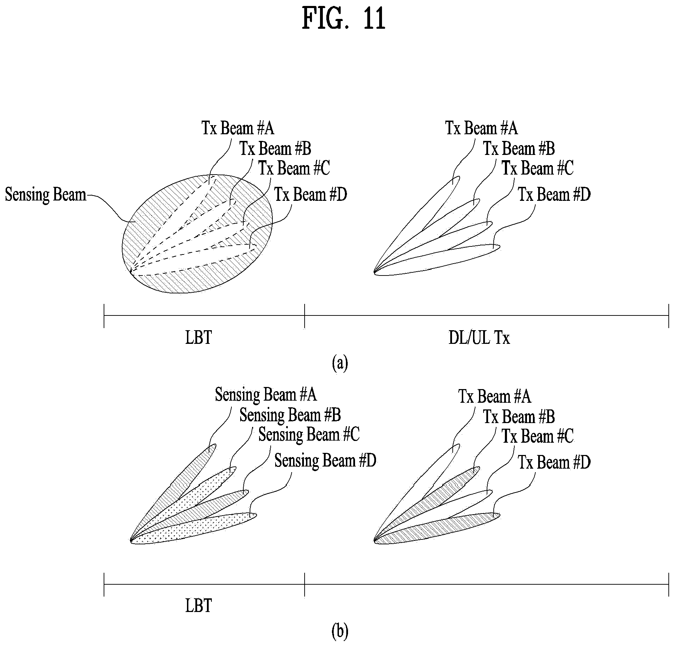

Here, referring to FIG. 11(a), a single sensing beam may mean one sensing beam that covers a plurality of Tx beams multiplexed through SDM.

Referring to FIG. 11(b), simultaneous LBT (i.e., simultaneously performed LBT per sensing beam) may mean that channel sensing for a plurality of Tx beams is simultaneously performed through a plurality of sensing beams. Meanwhile, in the case of the UE, simultaneous LBT may be applied only to a UE with multi-panel capability.

Referring to FIG. 11(b), LBT may be performed using, for example, sensing beams #1/2/3/4 in order to transmit four Tx beams #A/B/C/D in a COT Sensing beams #1/2/3/4 may be the same beam as Tx beams #A/B/C/D. For example, the same spatial domain filter as Tx beam #A may be used for sensing beam #1, the same spatial domain filter as Tx beam #B may be used for sensing beam #2, the same spatial domain filter as Tx beam #C may be used for sensing beam #3, and the same spatial domain filter as the Tx beam #D may be used for sensing beam #4.

Meanwhile, sensing beams #1/2/3/4 may be different beams that cover Tx beams #A/B/C/D. For example, sensing beam #1 may be a beam having a larger beam width than Tx beam #A as a beam including Tx beam #A. Sensing beam #2 may be a beam having a larger beam width than Tx beam #B as a beam including Tx beam #B. Sensing beam #3 may be a beam having a larger beam width than Tx beam #C as a beam including Tx beam #C. Sensing beam #4 may be a beam having a larger beam width than Tx beam #D as a beam including Tx beam #D.

As in [Method #1-1], when the UE or the BS performs LBT using a single sensing beam that covers all Tx beams to be transmitted in the COT, the UE or the BS may perform no transmission by dropping all SDM transmissions upon failing to perform LBT through the single sensing beam. For example, referring to FIG. 11(a), if the UE or the BS that have performed LBT using one sensing beam that covers Tx beams #A/B/C/D fails to perform LBT using the one sensing beam, the UE or the BS may drop all DL/UL transmissions for Tx beams #A/B/C/D multiplexed through SDM.

However, as in [Method #1-2], when the UE or the BS simultaneously performs LBT using sensing beams that cover all respective Tx beams to be transmitted in the COT (i.e. simultaneous LBT per sensing beam), the UE or the BS may attempt to perform SDM transmissions for transmissions corresponding to sensing beam directions for which LBT is successful, except for transmissions corresponding to sensing beam directions for which LBT fails, instead of dropping all transmissions.

For example, referring to FIG. 11(b), if the UE or the BS has succeeded in performing LBT for sensing beam #1 and sensing beam #3 (e.g., determined to be idle) but has failed to perform LBT for sensing beam #2 and sensing beam #4 (e.g., determined to be busy) as a result of simultaneously performing LBT using sensing beams #1/2/3/4 corresponding to Tx beams #A/B/C/D, respectively, the UE or the BS may perform transmissions corresponding to Tx beam #A and Tx beam #C corresponding to sensing beam #1 and sensing beam #3, respectively, but drop transmissions corresponding to Tx beam #B and Tx beam #D corresponding to sensing beam #2 and the sensing beam #4, respectively.

Meanwhile, [Method #1-2] may mean that a layer corresponding to a sensing beam direction for which LBT fails in transmissions through a plurality of layers configured previously for transmission is dropped and transmission is performed by lowering a rank. In addition, transmission by dropping the layer and lowering the rank may be limitedly applied only to DL transmission. This may be similar to an operation of transmitting a PDSCH only in a successful LBT subband by performing puncturing when LBT for a specific LBT subband in which a wideband physical downlink shared channel (PDSCH) resource is included fails in Rel-16 NR-U wideband DL transmission and dropping all transmissions when LBT for any one of LBT subbands in which a scheduled physical uplink shared channel (PUSCH) resource is included in the case of UL.

For example, when the BS performs simultaneous LBT per sensing beam through each of sensing beams #1/2 in order to transmit a PDSCH to UE #1 through layers #1/2 (e.g., corresponding to sensing beam #1) and transmit the PDSCH to UE #2 through layers #3/4 (e.g., corresponding to sensing beam #2), if LBT for sensing beam #1 covering layers #1/2 which have been attempted to be transmitted to UE #1 fails and LBT for the remaining sensing beams (e.g., sensing beam #2) is successful, the BS may drop PDSCH transmission to UE #1 through layers #1/2 and transmit the PDSCH only to UE #2 through layers #3/4.

[Method #2] Method of performing DL/UL transmission when LBT for partial beam directions fails although the BS or the UE has performed LBT for a single sensing beam or simultaneous LBT (e.g., Cat-3 LBT or Cat-4 LBT) for each of a plurality of sensing beams for a multi-beam COT in which beams are transmitted through TDM in a plurality of Tx beam directions in a COT

### 1. Method #2-1

When the UE or the BS performs LBT using a single sensing beam that covers all beams to be transmitted in the COT, if LBT using the single sensing beam fails, the UE or the BS may drop transmissions for all Tx beams multiplexed through TDM and perform no transmission.

According to [Method #2-1], if a channel is determined to be busy as a result of performing LBT for a plurality of Tx beams through one sensing beam, it is very difficult to discern by which Tx beam the channel is determined to be busy. Therefore, it is necessary to strictly determine an idle/busy state so that transmissions for all Tx beams covered by one sensing beam are dropped, thereby strictly preventing collision with other signals and stabilizing DL/UL transmissions through a plurality of Tx beams.

### 2. Method #2-2

When the UE or the BS simultaneously performs LBT through each of a plurality of beams that covers all beams to be transmitted in the COT,
(1) if LBT for at least one beam fails in LBT corresponding to beams to be transmitted on a corresponding time resource with respect to time resources scheduled by TDM (e.g., LBT based on one or more sensing beams corresponding to one or more Tx beams of the corresponding time resource), all transmissions scheduled on the corresponding time resource, in addition to transmissions corresponding to beams for which LBT fails (e.g., transmissions corresponding to one or more Tx beams covered by a sensing beam for which LBT fails), may be dropped. That is, all transmissions on the corresponding time resource may be dropped.
(2) Even if there are beams for which LBT fails in LBT corresponding to beams to be transmitted on a corresponding time resource with respect to time resources scheduled by TDM (e.g., LBT based on one or more sensing beams corresponding to one or more Tx beams of the corresponding time resource), transmissions of the remaining beam directions scheduled on the corresponding time resource, except for transmissions corresponding to the beams for which LBT fails (e.g., transmissions corresponding to one or more Tx beams covered by a sensing beam for which LBT fails), may be performed.

According to [Method #2-2], since each of a plurality of sensing beams covers one Tx beam, even if LBT through the plural sensing beams is simultaneously performed, whether each of Tx beams is idle/busy may be specifically and individually determined. Therefore, even if there is a sensing beam for which LBT fails among the plural sensing beams, since transmission for a Tx beam corresponding to a successful sensing beam may be performed, efficiency of transmission and predictability of a transmission timing may be increased by performing transmission suitable for a scheduling timing as much as possible. In addition, a COT may be shared with a corresponding Tx beam by acquiring the COT through a sensing beam for which LBT is successful, so that utility of transmission may be increased.

Meanwhile, according to (1), if LBT for one sensing beam among sensing beams corresponding to a plurality of Tx beams scheduled on one time resource (e.g., a slot) fails, transmission through a Tx beam for the corresponding sensing beam should be dropped. However, it may be difficult according to the capability of the UE or the BS to drop only transmission through the corresponding Tx beam and perform transmissions through other Tx beams multiplexed through SDM on the corresponding time resource. That is, it may be difficult to simultaneously perform transmission using only beams except for only the corresponding beam within the corresponding time resource, according to the capability of the UE or the BS (e.g., the number of panels or the installation state of the panels). In this case, according to (1), all Tx beams scheduled on the corresponding time resource may be dropped.

Meanwhile, if there is a sensing beam for which LBT fails among sensing beams corresponding to a plurality of Tx beams scheduled within a corresponding time resource according to the capability of the UE or the BS (e.g., the number of panels or the installation state of the panels), transmission only through the remaining Tx beams except for a Tx beam corresponding to the sensing beam may be performed. In this case, transmissions through the remaining Tx beams may be performed in terms of increasing transmission efficiency, predictability, and utility, by operating as in (2).

### 3. Method #2-3

In this method, the UE or the BS transmits, through TDM, some successful beams (e.g., Tx beams corresponding to sensing beams for which LBT is successful), except for transmission corresponding to a beam for which LBT fails (e.g., transmission corresponding to one or more Tx beams covered by the corresponding sensing beam of LBT). However, when a pause occurs within a COT, the UE or the BS does not perform additional LBT regardless of a gap length between transmissions and may continuously perform transmission of the next beam (i.e., additional transmission) for which LBT is successful after the pause.

### 4. Method #2-4

The UE or BS may transmit, through TDM, only some beams for which LBT is successful (e.g., Tx beams corresponding to sensing beams for which LBT is successful), except for transmission corresponding to a beam for which LBT fails (e.g., transmission corresponding to one or more Tx beams covered by the corresponding sensing beam of LBT).

However, when a pause occurs within the COT, the UE or the BS may sense whether a channel is continuously idle until just before transmission corresponding to the next beam for which LBT is successful is started immediately after pausing transmission and continuously perform transmission corresponding to the next beam for which LBT is successful (i.e., additional transmission) only when a channel is idle.

An example in which the pause may occur in the COT in [Method #2-3] and [Method #2-4] may include the case in which there is a beam that is not transmitted due to LBT failure among transmissions scheduled by TDM (e.g., a Tx beam corresponding to a sensing beam for which LBT fails) or the case in which a specific UL transmission is dropped by UL power control while a physical uplink control channel (PUCCH) is transmitted on different carriers in a carrier aggregation (CA) situation.

However, which method of [Method #2-3] and [Method #2-4] will be applied to transmission may be configured by the BS or may be an implementation issue. For example, [Method #2-3] or [Method #2-4] may be applied according to regional/national regulations. In addition, [Method #2-3] may selectively or always be applied by the UE with Cat-2 LBT capability. Alternatively, [Method #2-3] may always or selectively be applied by the UE with Cat-2 LBT capability when a gap between transmissions is X µs (e.g., 8 µs) or more.

According to [Method #2-3] and [Method #2-4], when a plurality of Tx beams is scheduled on a plurality of time resources, even if LBT for a Tx beam corresponding to one time resource among a plurality of time resources fails, transmission for the remaining time resources may be performed, so that efficiency and predictability of transmission may be increased.

Similar to SDM, upon succeeding in LBT for a single sensing beam or simultaneous LBT (e.g., Cat-3 LBT or Cat-4 LBT) for each of a plurality of sensing beams for a multi-beam COT in which beams are transmitted through TDM in a plurality of Tx beam directions in a COT, the BS or the UE may transmit a DL/UL signal.

Here, simultaneous LBT may mean that channel sensing for a plurality of Tx beams and/or a plurality of channels is simultaneously performed through a plurality of sensing beams. Meanwhile, in the case of the UE, simultaneous LBT may be applied only to a UE with sensing capability capable of simultaneously sensing a plurality of sensing beam directions.

For example, the UE or the BS may perform LBT using sensing beams #1/2/3/4 in order to transmit four Tx beams #A/B/C/D in the COT. In this case, sensing beams #1/2/3/4 may be the same beams as Tx beams #A/B/C/D. For example, the same spatial domain filter as Tx beam #A may be used for sensing beam #1, the same spatial domain filter as Tx beam #B may be used for sensing beam #2, the same spatial domain filter as Tx beam #C may be used for sensing beam #3, and the same spatial domain filter as Tx beam #D may be used for sensing beam #4.

Meanwhile, sensing beams #1/2/3/4 may be different beams that cover Tx beams #A/B/C/D. For example, sensing beam #1 may be a beam having a larger beam width than Tx beam #A as a beam including Tx beam #A. Sensing beam #2 may be a beam having a larger beam width than Tx beam #B as a beam including Tx beam #B. Sensing beam #3 may be a beam having a larger beam width than Tx beam #C as a beam including Tx beam #C. Sensing beam #4 may be a beam having a larger beam width than Tx beam #D as a beam including Tx beam #D.

Meanwhile, a single sensing beam may mean one sensing beam that covers a plurality of Tx beams multiplexed through TDM.

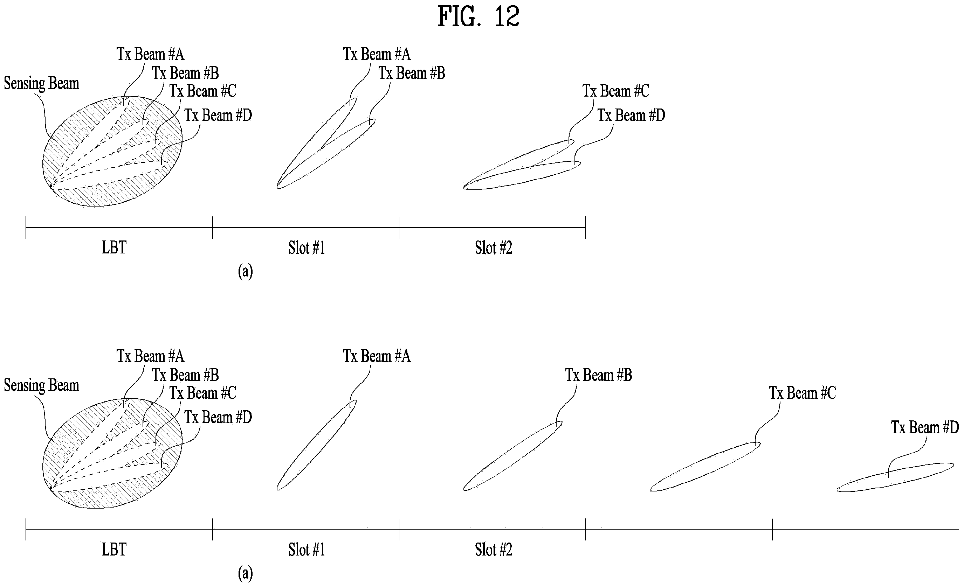

Referring to FIG. 12, when the UE or the BS fails to perform LBT for partial Tx beam directions as a result of performing LBT for a single sensing beam (e.g., Cat-3 LBT or Cat-4 LBT), it is difficult to discern between a Tx beam direction for which LBT is successful and a Tx beam direction for which LBT fails among transmissions scheduled by TDM on each time resource. Therefore, when LBT for the single sensing beam fails, the UE or the BS may drop all transmissions and perform no DL/UL transmission.

For example, referring to FIG. 12, FIG. 12(a) shows that, when transmissions corresponding to Tx beams #A/B and transmissions corresponding to Tx beams #C/D are scheduled through TDM in slots #1 and #2, respectively, and when the UE or the BS fails LBT as a result of performing LBT for Tx beam #A/B/C/D through a single sensing beam, all transmissions scheduled in slot #1 and slot #2 may be dropped. FIG. 12(b) shows that transmission corresponding to Tx beam #A is scheduled in slot #1, transmission corresponding to Tx beam #B is scheduled in slot #2, transmission corresponding to Tx beam #C is scheduled in slot #3, and transmission corresponding to Tx beam #D is scheduled in slot #4. In this case, when the UE or BS fails LBT for Tx beams #A/B/C/D through a single sensing beam, all transmissions corresponding to slots #1 to #4 may be dropped.

On the other hand, when the UE or the BS simultaneously performs LBT for each of a plurality of sensing beams, since LBT is performed in a plurality of sensing beam directions, even if LBT in some sensing beam directions fails, it may be efficient for the UE or the BS to perform transmissions corresponding to sensing beam directions for which LBT is successful. That is, when the UE or the BS desires to acquire channel occupancy (CO) including transmissions of different beams (i.e., Tx beams) on the time axis, if the UE or the BS fails to perform LBT for partial beams (i.e., Tx beams) as a result of performing directional LBT corresponding to all beams (i.e., Tx beams) included in CO before CO start, it may be more efficient for the UE or the BS to acquire CO through the remaining beams (i.e., Tx beams) for which LBT is successful than dropping all transmissions. In other words, if there is at least one beam for which LBT is successful when the UE or BS performs directional LBT corresponding to all beams (i.e., Tx beams) included in CO before CO start, it may be more efficient to cause the UE or the BS to acquire CO than dropping all transmissions.

For this purpose, there may be two methods. For example, when the direction of a Tx beam scheduled in a specific time resource is not one but several, (1) if LBT for at least one beam fails in LBT corresponding to beams to be transmitted on a corresponding time resource with respect to time resources scheduled by TDM (e.g., LBT based on one or more sensing beams corresponding to one or more Tx beams of the corresponding time resource), all transmissions scheduled on the corresponding time resource, in addition to transmissions corresponding to beams for which LBT fails (e.g., transmissions corresponding to one or more Tx beams covered by a sensing beam for which LBT fails), may be dropped.

Alternatively, (2) even if there are beams for which LBT fails in LBT corresponding to beams to be transmitted on a corresponding time resource with respect to time resources scheduled by TDM (e.g., LBT based on one or more sensing beams corresponding to one or more Tx beams of the corresponding time resource), transmissions of the remaining beam directions scheduled on the corresponding time resource, except for transmissions corresponding to the beams for which LBT fails (e.g., transmissions corresponding to one or more Tx beams covered by a sensing beam for which LBT fails), may be performed.

On the other hand, (1) is applicable to both the UE and the BS, and (2) may be allowed limitedly only to the BS.

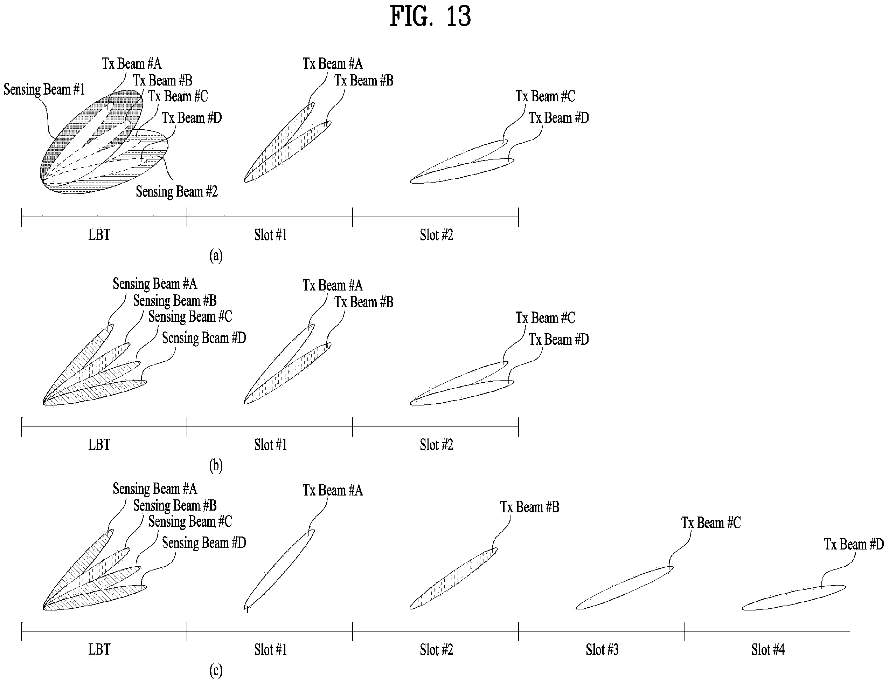

For example, referring to FIG. 13(a), in a state in which Tx beam #A and Tx beam #B are scheduled by SDM in time resource slot #1, and Tx beam #C and Tx beam #D are scheduled by SDM in time resource slot #2, LBT for sensing beam #1 that covers Tx beam #A and Tx beam #B may fail, whereas LBT for sensing beam #2 that covers Tx beam #C and Tx beam #D may be successful. In this case, according to (1), transmissions through Tx beams #A/B scheduled in slot #1 may be dropped, and DL/UL transmission only for Tx beams #C/D in slot #2 may be performed based on SDM.

As illustrated in FIG. 13(b), when LBT is performed through sensing beams #1/2/3/4 for Tx beams #A/B/C/D, respectively, and LBT only for sensing beam #2 corresponding to Tx beam #B fails, only transmission through Tx beam #B in slot #1 may be dropped according to (2) and transmissions through Tx beams #A/C/D may be performed. That is, only transmission through Tx beam #A may be performed in slot #1, and transmissions through Tx beams #C/D may be performed through SDM in slot #2.

As shown in FIG. 13(c), it is assumed that Tx beams #A/B/C/D are scheduled through TDM in slots #1/#2/#3/#4, respectively, and simultaneous LBT per sensing beam is performed for TX beams #A/B/C/D through sensing beams #1/2/3/4. In this case, if LBT only for sensing beam #2 corresponding to Tx beam #B fails and LBT for the remaining sensing beams #1/3/4 is successful, transmission through Tx beam #B in slot #2 may be dropped, and the remaining transmissions through the Tx beam #A/C/D in slots #1/3/4 may be performed.

In this case, only some successful Tx beams (i.e., Tx beams corresponding to the sensing beams for which LBT is successful), except for Tx beams for which LBT fails (i.e., Tx beams corresponding to sensing beams for which LBT fails), are transmitted through TDM, a pause (e.g., slot #2 or a time gap between Tx beam #A and Tx beam #C in FIG. 13(c)) may occur within a COT. In this case, in a nation/region in which Cat-2 LBT is not demanded, transmissions for beams scheduled at a subsequent timing (e.g., Tx beams #C/D scheduled in slots #3/4 in FIG. 13(c)) may be continuously performed without performing additional LBT regardless of a gap length generated by a Tx beam for which LBT fails (i.e., a Tx beam corresponding to a sensing beam for which LBT fails) (e.g., the length of slot #2 in FIG. 13(c)).

Alternatively, when a pause (e.g., slot #2 or a time gap between Tx beam #A and Tx beam #C in FIG. 13(c)) occurs within the COT, the UE or the BS may sense whether a channel is continuously idle until just before transmission corresponding to the next beam for which LBT is successful is started immediately after pausing transmission and continuously perform scheduled beam transmissions (e.g., transmissions through Tx beams #3/4 in FIG. 13(c)) only when a channel is idle.

The above-described example may be considered as a concept similar to continuous UL transmission including a transmission pause of standard document TS 37.213 as described in [Table 5] below. An example in which the pause in the COT may occur may include the case in which a beam that is not transmitted due to LBT failure (e.g., Tx beam #B corresponding to sensing beam #2 for which LBT fails in FIG. 13(c)) among transmissions scheduled by TDM in the COT as just mentioned or the case in which specific UL transmission is dropped by UL power control while a PUCCH is transmitted on different carriers in a CA situation.

**[Table 5]**

| |
|---|
| For contiguous UL transmissions(s) including a transmission pause, the following are applicable: |
| - If a UE is scheduled to transmit a set of consecutive UL transmissions without gaps using one or more UL grant(s), and if the UE has stopped transmitting during or before one of these UL transmissions in the set and prior to the last UL transmission in the set, and if the channel is sensed by the UE to be continuously idle after the UE has stopped transmitting, the UE may transmit a later UL transmission in the set using Type 2 channel access procedures or Type 2A UL channel access procedures without applying a CP extension. |
| - If a channel sensed by a UE is not continuously idle after the UE has stopped transmitting, the UE may transmit a later UL transmission in the set using Type 1 channel access procedure with the UL channel access priority class indicated in the DCI corresponding to the UL transmission. |

As described above, whether the UE or the BS will continuously perform transmission of a beam for which LBT is successful (e.g., transmission through Tx beam #C corresponding to sensing beam #3 in FIG. 13(c)) without additional LBT when the pause occurs within the COT or will sense whether a channel is continuously idle before next transmission (e.g., transmission through Tx beam #C corresponding to sensing beam #3 in FIG. 13(c)) after stopping transmission may be configured by the BS or may be an implementation issue. In addition, continuous idle sensing may selectively or always be applied by the UE with Cat-2 LBT capability. Alternatively, continuous idle sensing may always or selectively be applied by the UE with Cat-2 LBT capability when a gap between transmissions is X µs (e.g., 8 µs) or more.

[Method #3] Method of performing a multi-channel access procedure when LBT for partial beam directions of a plurality of beams or a single beam of a specific channel (e.g.,, LBT through a sensing beam corresponding to partial Tx beams of a plurality of Tx beams or a single Tx beam) fails or LBT for a specific channel among a plurality of channels fails, in a situation in which the BS or the UE simultaneously performs random backoff-based LBT (e.g., Cat-3 LBT or Cat-4 LBT) through a plurality of sensing beams that covers a plurality of Tx beams, respectively, for each channel, in order to transmit a single Tx beam or a plurality of Tx beams (e.g., a multi-beam COT for SDM/TDM transmission) through a plurality of channels

### 1. Method #3-1

When simultaneously performing random backoff-based LBT (e.g., Cat-3 LBT or Cat-4 LBT) through a plurality of sensing beams that covers a single Tx beam direction or a plurality of Tx beam directions, respectively, within each single channel, LBT may be performed using one common backoff counter value, instead of an independent backoff counter value, for each beam (e.g., sensing beam).

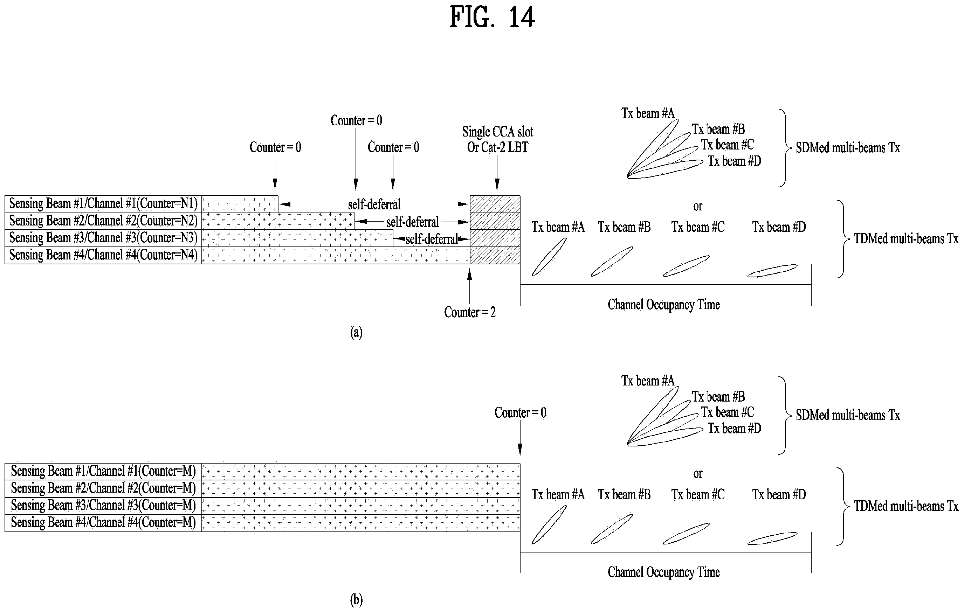

For example, as illustrated in FIG. 14(b), a common backoff counter value M to be commonly used for a plurality of sensing beams may be randomly selected to commonly count a common backoff counter value for a plurality of sensing beams. Alternatively, as in FIG. 14(a), the backoff counter value to be commonly used for a plurality of sensing beams may be randomly selected (e.g., a value in which N1=N2=N3=N4 is selected), and LBT may be performed for each of a plurality of sensing beams using the same backoff counter value. Here, counting of the backoff counter value may be performed with respect to each of the plurality of sensing beams.

### 2. Method #3-2

When simultaneously performing random backoff-based LBT (e.g., Cat-3 LBT or Cat-4 LBT) through a plurality of sensing beams that covers a single Tx beam direction or a plurality of Tx beam directions, respectively, within each single channel, LBT may be performed using an independent backoff counter value for each beam (e.g., sensing beam).

For example, referring to FIG. 14 (a), the UE or the BS may individually, randomly select back-off counter values N1, N2, N3, and N4 for sensing beams #1/2/3/4, respectively. In this case, counting of the backoff counter value may also be performed individually for each sensing beam.

According to [Method #3-1], since the UE or BS randomly selects only one counter value for performing LBT, [Method #3-1] may be simpler than [Method #3-2] in terms of the process. However, when a channel access priority class (CAPC) value is different for each sensing beam, the range of a selectable counter value is limited to the smallest CAPC, and thus there may be restrictions in selecting the counter value.

Meanwhile, according to [Method #3-2], the UE or BS selects a counter value for performing LBT with respect to each sensing beam. When CAPC values corresponding to respective sensing beams are different, a counter value according to each of different CAPC values may be randomly selected, so that a counter value appropriate for a CAPC corresponding to each sensing beam may be individually selected.

### 3. Method #3-3

In [Method #3-1] and [Method #3-2], the UE or the BS may simultaneously perform random backoff-based LBT (e.g., Cat-3 LBT or Cat-4 LBT) through a plurality of sensing beams that covers a plurality of Tx beam directions, respectively, for a multi-beam COT of specific channel(s). If LBT for a specific sensing beam is successful before a transmission start time (e.g., when the counter of a sensing beam becomes 0 before the transmission start time), self-deferral may be performed until an LBT procedure of different sensing beams is ended. Then, Cat-2 LBT or single CCA slot sensing may be performed immediately before the transmission start time and Tx beams corresponding to successful sensing beams may be transmitted through a plurality of channels.

For example, referring to FIG. 14(a), the UE or BS performs random backoff counter-based LBT (e.g., Cat-3 LBT or Cat- 4 LBT) based on each of sensing beams #1/2/3/4. If a counter of sensing beam #1 becomes 0 first, self-deferral is performed until LBT for sensing beams #2/3/4 is completed. In FIG. 14(a), counter values of sensing beams #2/3 become 0 before the transmission time, but a counter value of sensing beam #4 does not become 0 before the transmission time (or until a certain time from the transmission time). Even if the counter value does not reach 0 until a certain timing, LBT at the corresponding timing is considered as being completed. Meanwhile, when LBT is completed, the UE or BS may perform Cat-2 LBT or single CCA slot sensing for sensing beams #1/2/3, counter values of which become 0, and perform DL/UL transmission corresponding to a sensing beam for which Cat-2 LBT or single CCA slot sensing is successful.

### 4. Method #3-4

In [Method #3-1] and [Method #3-2], the UE or the BS may perform random backoff-based LBT (Cat-3 LBT or Cat-4 LBT) for a single Tx beam or a plurality of Tx beams for specific channel(s). If LBT for the specific channel(s) is successful before a transmission start time, self-deferral may be performed until an LBT procedure of different channel(s) is ended. Then, Cat-2 LBT (or single CCA slot sensing) may be performed immediately before the transmission start time and Tx beams corresponding to successful channels may be transmitted through a plurality of channels (e.g., channels for which LBT is successful).

For example, referring to FIG. 14(a), the UE or BS performs random backoff counter-based LBT (e.g., Cat-3 LBT or Cat- 4 LBT) based on each of channels #1/2/3/4. If a counter of channel #1 becomes 0 first, self-deferral is performed until LBT for channels #2/3/4 is completed. In FIG. 14(a), counter values of channels #2/3 become 0 before the transmission time, but a counter value of channel #4 does not become 0 before the transmission time (or until a certain time from the transmission time). If the counter value does not reach 0 until a certain timing, LBT of channels #1/2/3 is determined to be success and LBT of channel #4 is determined to be failure. LBT of channels #1/2/3/4 at the corresponding timing is considered as being completed. Meanwhile, when LBT is completed, the UE or BS may perform Cat-2 LBT or single CCA slot sensing for channels #1/2/3, counter values of which become 0, and perform DL/UL transmission corresponding to a channel for which Cat-2 LBT or single CCA slot sensing is successful.

According to [Method #3-3] and [Method #3-4], DL/UL signals through multiplexed Tx beams within the same COT may be predictably transmitted at a scheduled time. In other words, even if a success time of LBT of each of sensing beams (or each of channels) corresponding to the multiplexed Tx beams is different, DL/UL transmission may be performed at the scheduling time of the DL/UL signal, so transmission predictivity and complexity are reduced. In addition, the reliability of a measurement result for a Tx beam may be increased by performing LBT for all sensing beams corresponding to all Tx beams, and collision with other signals may be minimized.

In addition, when a backoff counter value corresponding to a specific sensing beam (or a specific channel) becomes 0 and DL/UL transmission through a Tx beam corresponding to the specific beam is started, LBT and transmission may not be simultaneously performed. Therefore, DL/UL transmissions corresponding to the remaining sensing beams may be automatically dropped. Accordingly, since a DL/UL transmission opportunity may be decreased from the viewpoint of overall transmission, and the dropped DL/UL transmission needs to be rescheduled, transmission delay may be increased and resource efficiency may be decreased. Therefore, the above-described problems may be solved/prevented according to [Method #3-3] and [Method #3-4].

### 5. Method #3-5

When a transmission start time is reached in [Method #3-3] and [Method #3-4], if LBT only for specific channel(s) corresponding to partial beams, rather than all beams, is finally successful at a transmission start time, all transmissions for the corresponding channel(s) may be dropped. Only when LBT for all beams corresponding to the specific channel(s) is finally successful, DL/UL transmission may be performed through the corresponding channels. In this case, the above-described beams may be Tx beams corresponding to the corresponding channels. According to [Method #3-3], LBT for a Tx beam may be LBT through one or more sensing beams that cover a Tx beam corresponding to a corresponding channel. According to [Method #3-4], LBT for a Tx beam may be LBT for a channel corresponding to the Tx beam.

### 6. Method #3-6

When a transmission start time is reached in [Method #3-3] and [Method #3-4], even if LBT only for specific channel(s) corresponding to partial beams, rather than all beams, is finally successful, transmissions only of beam directions for which LBT fails, rather than all transmissions for the corresponding channels, may be dropped. DL/UL signals may be transmitted through a plurality of channels in beam directions for which LBT is successful for each channel. In this case, the above-described beams may be Tx beams corresponding to the corresponding channels. According to [Method #3-3], LBT for a Tx beam may be LBT through one or more sensing beams that cover one or more Tx beam corresponding to a corresponding channel. According to [Method #3-4], LBT for a Tx beam may be LBT for a channel corresponding to the Tx beam.

[Method #1] and/or [Method #2] described above may be applied to the method of simultaneously performing random backoff-based LBT through a plurality of sensing beams that cover a plurality of Tx beam directions, respectively, for SDM/TDM transmission of each single channel and the transmission method when LBT for some beam directions fails.

According to [Method #3-5], if LBT for one sensing beam among sensing beams corresponding to a plurality of Tx beams scheduled for one channel fails, transmission through a Tx beam for the corresponding sensing beam should be dropped. However, it may be difficult according to the capability of the UE or the BS to drop only transmission through the corresponding Tx beam and perform transmissions through other Tx beams scheduled for the corresponding channel. That is, it may be difficult to simultaneously perform transmission using only beams except for only the corresponding beam within the corresponding channel, according to the capability of the UE or the BS (e.g., the number of panels or the installation state of the panels). In this case, according to [Method #3-5], all Tx beams scheduled on the corresponding time resource may be dropped.

Meanwhile, if there is a sensing beam for which LBT fails among sensing beams corresponding to a plurality of Tx beams scheduled within a corresponding channel according to the capability of the UE or the BS (e.g., the number of panels or the installation state of the panels), transmission only through the remaining Tx beams except for a Tx beam corresponding to the sensing beam may be performed. In this case, transmissions through the remaining Tx beams may be performed, in terms of increasing transmission efficiency, predictability, and utility, by operating as in [Method #3-6].

### 7. Method #3-7

When LBT is performed using a common backoff counter value for all beams (e.g., sensing beams) as in [Method #3-1], if random backoff-based LBT is simultaneously performed through a plurality of sensing beams that covers a plurality of Tx beam directions, respectively, for a multi-beam COT in each single channel, a counter value may be configured/indicated to be decreased only when LBT is successful for all of the sensing beams. This operation may be performed as if a plurality of sensing beams operates as one single (wide) sensing beam.

For example, referring to FIG. 14(b), if a common backoff counter value M for sensing beams #1/2/3/4 is selected and even if LBT is individually performed for sensing beams #1/2/3/4, the counter value M may be decreased by one only when all sensing beams #1/2/3/4 are determined to be idle. Therefore, in the case of FIG. 14(b), since LBT for sensing beams #1/2/3/4 will have a counter value of 0 at the same timing, DL/UL transmissions through Tx beams #A/B/C/D may be performed immediately after LBT for sensing beams #1/2/3/4 is successful.

According to [Method #3-7], if the counter value is commonly decreased, since substantially the same effect as an effect of performing LBT using a single sensing beam occurs, determination as to whether a channel is idle/busy through LBT may be simplified. In addition, since the counter values for all sensing beams are equally reduced, it is unnecessary to perform self-deferral, Cat-2 LBT, or single CCA slot sensing as in [Method #3-3] and [Method #3-4]. Therefore, the procedure may be simplified. If the counter value becomes 0, since transmissions corresponding to all sensing beams may be simultaneously performed, the transmission predictability and complexity may be reduced. Further, since the counter value is reduced when all sensing beams are idle, the reliability of measurement results may be increased.

### 8. Method #3-8

In [Method #3-1] and [Method #3-2], counter values corresponding to beams (e.g., Tx beams) that are not transmitted because a counter value does not become 0 according to LBT based on a sensing beam or channel at a DL/UL transmission start timing through each single channel or channels may be held. In addition, the UE or the BS may wait for a specific time (e.g., 4 slots or a time duration configured/indicated previously or defined in the standard) after transmission of a plurality of channels for beam directions for which LBT is successful for each channel and then perform LBT by resuming the held counter values.

Alternatively, in [Method #3-1] and [Method #3-2], counter values for all beams (e.g., Tx beams or sensing beams), including counter values corresponding to beams (e.g., Tx beams) that are not transmitted because a counter value does not become 0 according to LBT based on a sensing beam or channel at a DL/UL transmission start timing through each single channel or channels, may be reset. For example, the UE or the BS may wait for a specific time (e.g., 4 slots or a time duration configured/indicated in advance or defined in the standard) after transmission of a plurality of channels for beam directions for which LBT is successful for each channel and then reset a counter value corresponding to each of all beams (e.g., Tx beams or sensing beams). The UE or the BS may randomly select a new counter value and perform an LBT procedure for each sensing beam or each channel based on the selected counter value.

For example, FIG. 14(a) illustrates that a counter value for sensing beam #4 stops at 2 before a DL/UL transmission time or before a predetermined period from the transmission time and thus LBT based on sensing beam #4 finally fails. In this case, when performing LBT again based on sensing beam #4, a counter value of LBT based on sensing beam #4 may be counted again from 2 after DL/UL transmission corresponding to sensing beams #1/2/3 is ended.

Alternatively, the UE or the BS may count a corresponding counter value while performing LBT for each of sensing beams #1/2/3/4 by initializing counter values for all sensing beams #1/2/3/4 and randomly reselecting a counter value for each of sensing beams #1/2/3/4 after DL/UL transmission corresponding to sensing beams #1/2/3 is ended.

According to [Method #3-8], if a counter value is held and then used again, the procedure for selecting the counter value may be skipped, thereby simplifying the procedure and ensuring continuity with previous LBT. However, if the counter value is held and then used again, since the held counter value is relatively small, channel measurement may not be sufficiently performed. In addition, if a DL/UL signal different from an existing DL/UL signal is scheduled at a timing of performing LBT again, and a CAPC value of the DL/UL signal is different from a CAPC value of the existing DL/UL signal, since the reselected counter value of LBT considers only the CAPC value of the existing DL/UL signal, this may not be suitable for transmission of other DL/UL signals. Therefore, taking this into consideration, it may be advantageous to initialize all counter values and randomly select a new counter value again.

### 9. Method #3-9

In consideration of UE complexity, the UE may always perform, only by a single-channel access procedure, random backoff-based LBT (e.g., Cat-3 or Cat-4 LBT) through a plurality of sensing beams that covers a plurality of Tx beams, respectively, for a multi-beam COT (COT for SDM/TDM transmission). Upon performing a multi-channel access procedure, the UE may always perform only single (wide) sensing beam LBT (e.g., omni-beam-based Cat-3 or Cat-4 LBT). Always performing only the single-channel access procedure may mean that it is expected that the single-channel access procedure is always configured/indicated.
(1) If the BS is capable of indicating/configuring, to/for the UE, whether to perform LBT for a multi-beam COT through a single (wide) sensing beam (e.g., omni-beam-based Cat-3 LBT or Cat-4 LBT) or random backoff-based LBT (e.g., Cat-3 LBT or Cat-4 LBT) through a plurality of sensing beams that covers a plurality of Tx beams, respectively, the BS may be allowed to indicate/configure whether LBT is single (wide) sensing beam LBT or LBT through a plurality of sensing beams that covers a plurality Tx beam directions, respectively, in the case of a single-channel access procedure. In the case of a multi-channel access procedure, the BS may indicate/configure only single (wide) sensing beam LBT (e.g., omni-beam-based Cat-3 LBT or Cat-4 LBT).
(2) (i) the number of beams (e.g., sensing beams) when simultaneously performing random backoff-based LBT through a plurality of sensing beams that covers a plurality of Tx beam directions for each single channel, respectively, (ii) the number of beams (e.g., sensing beams) when simultaneously performing random backoff-based LBT through a plurality of sensing beams that covers a plurality of Tx beam directions, respectively, or (iii) the number of channels when performing a multi-channel access procedure through omni-beam sensing may be limited to X. In addition, the value of X may be determined as [the number of sensing beams used when performing LBT for a multi-beam COT] x [the number of channels to perform a multi-channel access procedure]. In this case, the X value may be a value reported by the UE through capability signaling, a value configured/indicated by the BS, or a value defined in the standard. In addition, when the BS configures/indicates the value of X, the BS may configure/indicate the value of X based on the capability of the UE.

According to [Method #3-9], when only a single-channel access procedure may be performed while performing LBT through a plurality of sensing beams or single sensing beam LBT may always be performed while performing a multi-channel access procedure, so that complexity may be reduced in performing LBT of the UE.

In addition, single (wide) beam LBT may mean LBT through a sensing beam that covers all Tx beam directions. In addition, simultaneous random backoff-based LBT (e.g., Cat-3 LBT or Cat-4 LBT) through a plurality of sensing beams that covers a plurality of Tx beam directions, respectively, may mean simultaneously performing channel sensing in a plurality of directions. The UE may perform a corresponding LBT procedure only when there is multi-panel capability.

For example, in order to transmit four Tx beams #A/B/C/D in a COT, the UE may perform LBT using sensing beams #1/2/3/4. In this case, sensing beams #1/2/3/4 may be the same beams as Tx beams #A/B/C/D. For example, the same spatial domain filter as Tx beam #A may be used for sensing beam #1, the same spatial domain filter as Tx beam #B may be used for sensing beam #2, the same spatial domain filter as Tx beam #C may be used for sensing beam #3, and the same spatial domain filter as Tx beam #D may be used for sensing beam #4.

Meanwhile, sensing beams #1/2/3/4 may be different beams that cover Tx beams #A/B/C/D. For example, sensing beam #1 may be a beam having a larger beam width than Tx beam #A as a beam including Tx beam #A. Sensing beam #2 may be a beam having a larger beam width than Tx beam #B as a beam including Tx beam #B. Sensing beam #3 may be a beam having a larger beam width than Tx beam #C as a beam including Tx beam #C. Sensing beam #4 may be a beam having a larger beam width than Tx beam #D as a beam including Tx beam #D.

In addition, random backoff-based LBT simultaneously performed through a plurality of sensing beams for a multi-beam COT may be performed through the same number of sensing beams that correspond to or cover Tx beams to be transmitted in the COT or may be performed through a larger or smaller number of sensing beams that cover all Tx beams to be transmitted in the COT although the number of sensing beams is different from the number of Tx beams.

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

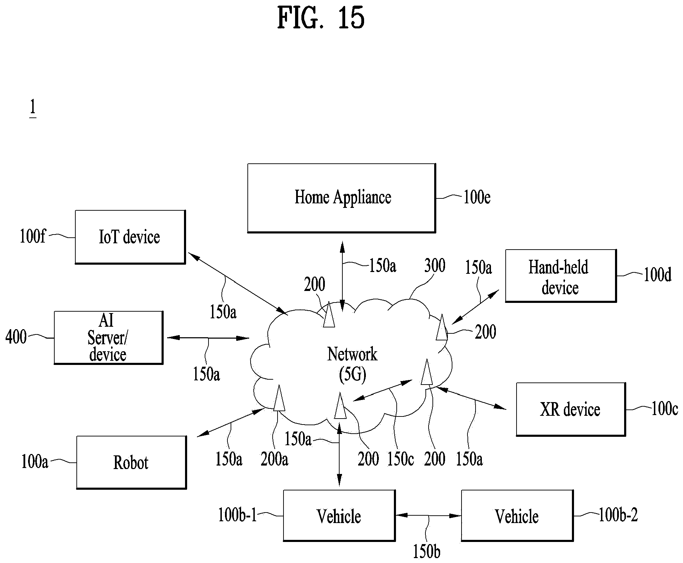

FIG. 15 illustrates a communication system 1 applied to the present disclosure.

Referring to FIG. 15, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g. relay or integrated access backhaul(IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

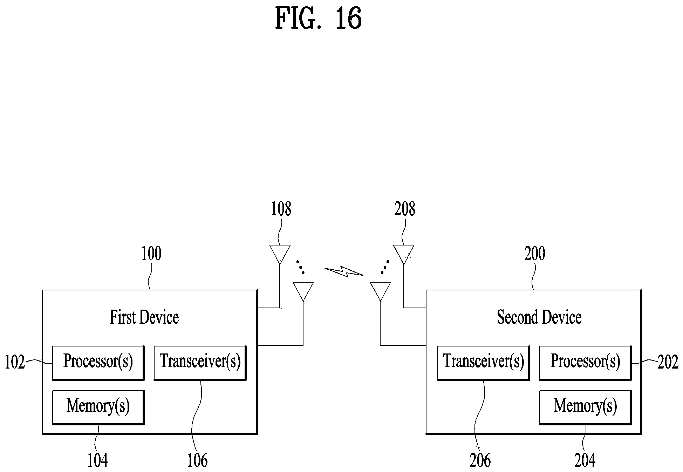

FIG. 16 illustrates wireless devices applicable to the present disclosure.

Referring to FIG. 16, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

Specifically, instructions and/or operations, controlled by the processor 102 of the first wireless device 100 and stored in the memory 104 of the first wireless device 100, according to an embodiment of the present disclosure will be described.

Although the following operations will be described based on a control operation of the processor 102 in terms of the processor 102, software code for performing such an operation may be stored in the memory 104. For example, in the present disclosure, the at least one memory 104 may be a computer-readable storage medium and may store instructions or programs. The instructions or programs may cause, when executed, the at least one processor operably connected to the at least one memory to perform operations according to embodiments or implementations of the present disclosure, related to the following operations.

For example, the processor 102 may sense a plurality of channels and/or Tx beams based on at least one sensing beam. In this case, the at least one sensing beam may be a beam that covers the plural Tx beams. For example, one sensing beam may cover all of the plural Tx beams, and a plurality of sensing beams may cover the Tx beams, respectively.

The processor 102 may determine whether sensing for each of the plural channels and/or Tx beams is successful or not. For example, the processor 102 may determine whether each of the plural channels and/or plural Tx beams is idle or busy.

In addition, the processor 102 may transmit at least one UL signal through the transceiver 106 based on each of the plural channels and/or Tx beams being idle or busy.

Meanwhile, a detailed operation of the above-described processor 102 may be based on at least one of [Method #1] to [Method #3].

As another example, the processor 102 may determine at least one Rx beam for receiving at least one DL signal transmitted through the at least one Tx beam.

In addition, the processor 102 may receive, through the transceiver 106, at least one DL signal transmitted based on at least one of [Method #1] to [Method #3] through at least one Rx beam.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Specifically, instructions and/or operations, controlled by the processor 202 of the second wireless device 100 and stored in the memory 204 of the second wireless device 200, according to an embodiment of the present disclosure will be described.

Although the following operations will be described based on a control operation of the processor 202 in terms of the processor 202, software code for performing such an operation may be stored in the memory 204. For example, in the present disclosure, the at least one memory 204 may be a computer-readable storage medium and may store instructions or programs. The instructions or programs may cause, when executed, the at least one processor operably connected to the at least one memory to perform operations according to embodiments or implementations of the present disclosure, related to the following operations.

For example, the processor 202 may sense a plurality of channels and/or Tx beams based on at least one sensing beam. In this case, the at least one sensing beam may be a beam that covers the plural Tx beams. For example, one sensing beam may cover all of the plural Tx beams, and a plurality of sensing beams may cover the plural Tx beams, respectively.

The processor 202 may determine whether sensing for each of the plural channels and/or Tx beams is successful or not. For example, the processor 202 may determine whether each of the plural channels and/or Tx beams is idle or busy.

In addition, the processor 202 may transmit at least one DL signal through the transceiver 206 based on each of a plural channels and/or Tx beams being idle or busy.

Meanwhile, a detailed operation of the above-described processor 202 may be based on at least one of [Method #1] to [Method #3].

As another example, the processor 202 may determine at least one Rx beam for receiving at least one UL signal transmitted through the at least one Tx beam.

In addition, the processor 202 may receive, through the transceiver 206, at least one UL signal transmitted based on at least one of [Method #1] to [Method #3] through at least one Rx beam.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

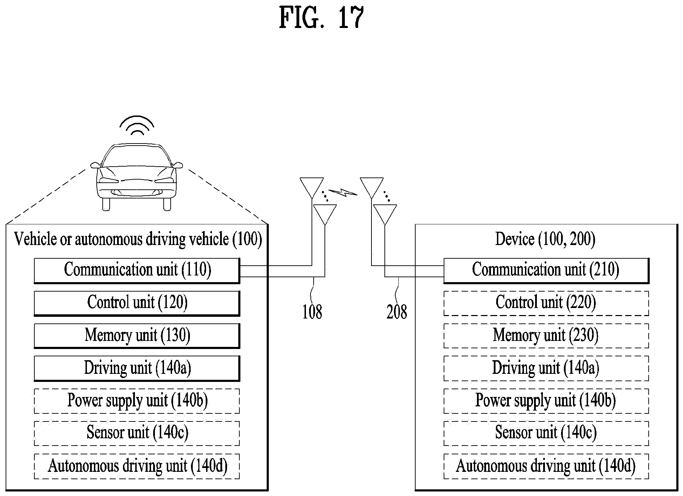

FIG. 17 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 17, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

The embodiments of the present disclosure described herein below are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the present disclosure or included as a new claim by a subsequent amendment after the application is filed.

In the present disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

While the above-described method of transmitting and receiving a signal in a U-band and an apparatus therefor have been mainly described as examples applied to a 5G NewRAT system, the method and apparatus may also be applied to various wireless communication systems in addition to the 5G NewRAT system.

It will be apparent to those skilled in the art that various modifications and variations may be made in the present disclosure without departing from the spirit or scope of the disclosures. Thus, it is intended that the present disclosure covers the modifications and variations of this disclosure provided they come within the scope of the appended claims and their equivalents.

## Claims

1. A method of performing an Uplink (UL) transmission by a user equipment (UE) in a wireless communication system, the method comprising:
counting counter values for each of a plurality of sensing beams independently based on performing a first sensing on each of the plurality of sensing beams;
performing a first UL transmission corresponding to a first sensing beam, among the plurality of sensing beams, which is determined to be IDLE based on the first sensing;
initializing the counter values after an end of the first UL transmission; and
performing a second UL transmission corresponding to a second sensing beam, among at least one sensing beam of the plurality of sensing beams, which is determined to be IDLE based on a second sensing on the at least one sensing beam.

2. The method of Claim 1, wherein the first sensing beam covers a transmission beam of the first UL transmission, and
wherein the second sensing beam covers a transmission beam of the second UL transmission.

3. The method of Claim 1 or 2, wherein the counter values are determined for each of the plurality of sensing beams for the first sensing, and
wherein the counter values are re-determined for each of the plurality of sensing beams.

4. The method of any one preceding Claim, wherein a counter value corresponding to the first sensing beam and a counter value corresponding to a third sensing beam which is determined not to be IDLE are initialized after the first UL transmission.

5. The method of any one preceding Claim, wherein a counter value corresponding to the first sensing beam has been reached to 0 before a time of the first UL transmission,
wherein UL transmission corresponding to the first sensing beam is not performed until the time of the first UL transmission.

6. The method of any one preceding Claim, wherein channel access procedures based on the first sensing and the second sensing for each of the plurality of sensing beams.

7. A user equipment (UE) for performing an Uplink (UL) transmission in a wireless communication system, the UE comprising:
at least one transceiver;
at least one processor; and
at least one memory operably connected to the at least one processor and configured to store instructions that, when executed, cause the at least one processor to perform operations comprising:
counting counter values for each of a plurality of sensing beams independently based on performing a first sensing on each of the plurality of sensing beams;
performing, through the at least one transceiver, a first UL transmission corresponding to a first sensing beam, among the plurality of sensing beams, which is determined to be IDLE based on the first sensing;
initializing the counter values after an end of the first UL transmission; and
performing, through the at least one transceiver, a second UL transmission corresponding to a second sensing beam, among at least one sensing beams of the plurality of sensing beams, which is determined to be IDLE based on a second sensing on the at least one sensing beam.

8. The UE of Claim 7, wherein the first sensing beam covers a transmission beam of the first UL transmission, and
wherein the second sensing beam covers a transmission beam of the second UL transmission.

9. The UE of Claim 7 or 8, wherein the counter values are determined for each of the plurality of sensing beams for the first sensing, and
wherein the counter values are re-determined for each of the plurality of sensing beams.

10. The UE of any one of Claims 7 to 9, wherein a counter value corresponding to the first sensing beam and a counter value corresponding to a third sensing beam which is determined not to be IDLE are initialized after the first UL transmission.

11. The UE of any one of Claims 7 to 10, wherein a counter value corresponding to the first sensing beam has been reached to 0 before a time of the first UL transmission,
wherein UL transmission corresponding to the first sensing beam is not performed until the time of the first UL transmission.

12. The UE of any one of Claims 7 to 11, wherein channel access procedures based on the first sensing and the second sensing for each of the plurality of sensing beams.

13. A computer-readable storage medium including at least one computer program causing at least one processor to perform operations comprising:
counting counter values for each of a plurality of sensing beams independently based on performing a first sensing on each of the plurality of sensing beams;
performing a first UL transmission corresponding to a first sensing beam, among the plurality of sensing beams, which is determined to be IDLE based on the first sensing;
initializing the counter values after an end of the first UL transmission; and
performing a second UL transmission corresponding to a second sensing beam, among at least one sensing beams of the plurality of sensing beams, which is determined to be IDLE based on a second sensing on the at least one sensing beam.

14. A method of performing a Downlink (DL) transmission by a base station (BS) in a wireless communication system, the method comprising:
counting counter values for each of a plurality of sensing beams independently based on performing a first sensing on each of the plurality of sensing beams;
performing a first DL transmission corresponding to a first sensing beam, among the plurality of sensing beams, which is determined to be IDLE based on the first sensing;
initializing the counter values after an end of the first DL transmission; and
performing a second DL transmission corresponding to a second sensing beam, among at least one sensing beams of the plurality of sensing beams, which is determined to be IDLE based on a second sensing on the at least one sensing beam.

15. A base station (BS) for performing a Downlink (DL) transmission in a wireless communication system, the BS comprising:
at least one transceiver;
at least one processor; and
at least one memory operably connected to the at least one processor and configured to store instructions that, when executed, cause the at least one processor to perform operations comprising:
counting counter values for each of a plurality of sensing beams independently based on performing a first sensing on each of the plurality of sensing beams;
performing, through the at least one transceiver, a first DL transmission corresponding to a first sensing beam, among the plurality of sensing beams, which is determined to be IDLE based on the first sensing;
initializing the counter values after an end of the first DL transmission; and
performing, through the at least one transceiver, a second DL transmission corresponding to a second sensing beam, among at least one sensing beams of the plurality of sensing beams, which is determined to be IDLE based on a second sensing on the at least one sensing beam.
